# FASCICULE DE BREVET EUROPEEN

(11) **EP 3 285 623 B1**
(45) Date de publication et mention de la délivrance du brevet: **12.02.2020**
(21) Numéro de dépôt: 16717958.9
(22) Date de dépôt: 22.04.2016
(51) Int. Cl.: A47J 31/36

(54) **SYSTÈME DE DÉTECTION DE COINCEMENT POUR MACHINE DE PRODUCTION DE BOISSONS PAR INFUSION**
STAUERKENNUNGSSYSTEM FÜR EINE MASCHINE ZUR HERSTELLUNG VON BRÜHGETRÄNKEN
JAM DETECTION SYSTEM FOR AN INFUSION BEVERAGE PRODUCTION MACHINE

(30) Priorité: 22.04.2015 FR 1553606
(43) Date de publication de la demande: 28.02.2018
(73) Titulaire: Compagnie Méditerranéenne des Cafés, 06510 Carros (FR)
(72) Inventeur: BLANC, Jean-Pierre, 06000 Nice (FR); THIBAULT, Bertrand, 06000 Nice (FR)
(74) Mandataire: Hautier, Nicolas
(86) Numéro de dépôt international: PCT/EP2016/059106
(87) Numéro de publication internationale: WO 2016/170174

(56) Documents cités:
- WO-A1-2005/058111
- WO-A1-2011/147794
- WO-A1-2015/014916

## Description

### DOMAINE TECHNIQUE DE L'INVENTION

La présente invention concerne un dispositif de production de boissons par infusion d'un produit sous forme de conditionnement.

Elle trouve plus particulièrement son application dans le domaine des machines à café de type EXPRESSO. Elle pourra également s'appliquer à la production de boissons à partir d'autres matières telles que le thé.

### ÉTAT DE LA TECHNIQUE

De nombreuses machines à café utilisent désormais des conditionnements également désignés capsules ou doses qui forment un ensemble relativement compact de produit à infuser.

De manière générale, les machines de préparation de boissons comprennent une chambre d'infusion destinée à recevoir de l'eau chaude et un conditionnement de produit à infuser. La fiabilité de l'insertion du conditionnement et de son retrait hors de la chambre d'infusion pose de nombreuses difficultés.

Les documents WO2011147792, FR2916336 ou encore NESTEC proposent des machines dont la fiabilité est globalement élevée. Cette fiabilité élevée résulte essentiellement d'un fonctionnement séquentiel de la machine reposant sur un nombre de pièces et une cinématique bien spécifiques.

Le document WO2005/058111 décrit quant à lui une machine dans laquelle le positionnement de la capsule est contrôlé par des micro-interrupteurs.

Cependant, en pratique on observe encore parfois que la machine se bloque et empêche la préparation de la boisson. Le conditionnement coincé doit alors être retiré manuellement par l'utilisateur voire par un service dédié à la maintenance des machines.

Il existe donc un besoin consistant à rendre encore plus fiable les machines de préparation de boissons à partir d'un conditionnement enfermant un produit à infuser, en réduisant les risques de coincement d'un conditionnement dans la machine et en facilitant leur décoincement si un conditionnement venait tout de même à se coincer. Tel est le but de la présente invention.

### RÉSUMÉ DE L'INVENTION

A cet effet, on prévoit selon l'invention un système de production de boisson à partir d'un conditionnement comprenant un produit à infuser le système comprenant :
deux demi chambres formant ensemble une chambre d'infusion à l'intérieur de laquelle le conditionnement est destiné à être infusé lorsqu'il atteint une position d'infusion ;
une première et une deuxième pièces, distinctes des deux demi chambres, présentant une mobilité relative et définissant en partie au moins un ensemble de réception destiné à réceptionner le conditionnement avant son positionnement dans une position d'infusion à l'intérieur de la chambre d'infusion.

La première pièce comporte au moins une zone de soutien configurée pour, lorsque les première et deuxième pièces sont dans une première position relative, stopper le déplacement de préférence par gravité du conditionnement et entrer au contact du conditionnement de manière à soutenir le conditionnement dans une position de rétention empêchant le conditionnement d'atteindre la position d'infusion. Dans leur première position relative, les première et deuxième pièces définissent ainsi ensemble une portion d'espace configurée pour être occupée par le conditionnement dans la position de rétention.

Lorsque les première et deuxième pièces sont dans une deuxième position relative, la au moins une zone de soutien libère le passage du conditionnement permettant à ce dernier d'atteindre, de préférence par gravité, la position d'infusion.

Le système comprend en outre un organe de détection solidaire de la première pièce. Cet organe de détection est conformé pour:
- pénétrer dans ladite portion d'espace destinée à accueillir le conditionnement dans sa position de rétention lors du déplacement relatif des première et deuxième pièces et avant que les première et deuxième pièces atteignent leur deuxième position relative;
- être absent de ladite portion d'espace destinée à accueillir le conditionnement dans sa position de rétention lorsque les première et deuxième pièces sont dans leur première position relative.

Selon un mode de réalisation, l'organe de détection est conformé pour, avant que les première et deuxième pièces atteignent leur deuxième position relative, buter sur un conditionnement qui serait bloqué en position de rétention ou entre les positions de rétention et d'infusion.

Selon un mode de réalisation, l'organe de détection est conformé pour, avant que les première et deuxième pièces atteignent leur deuxième position relative, pénétrer dans ladite portion d'espace occupée par le conditionnement positionné dans la position de rétention.

Ainsi, si l'organe de détection bute contre un conditionnement, la première pièce reste alors bloquée et n'atteint pas la deuxième position. Le système ne peut alors pas poursuivre le cycle de préparation de la boisson. En particulier, il ne referme par la chambre d'infusion et/ou n'injecte pas d'eau chaude dans la chambre d'infusion.
Ainsi, il est alors aisé de retirer le conditionnement bloqué et celui introduit en dernier lieu afin de débloquer le système.

L'invention permet ainsi de renforcer de manière particulièrement significative la fiabilité de ce type de machine. En particulier elle permet d'interrompre de manière très précoce le cycle de préparation de boisson lorsqu'un conditionnement précédent est resté coincé lors d'un cycle précédent. Il est alors beaucoup plus aisé pour l'utilisateur d'intervenir pour retirer le conditionnement coincé et remettre la machine en fonctionnement.

De manière facultative, l'invention comprend en outre au moins l'une quelconque des caractéristiques optionnelles suivantes prises séparément ou en combinaison :
Selon un mode de réalisation, le système comprend un interrupteur configuré pour être actionné lorsque les première et deuxième pièces sont dans leur deuxième position relative et configuré de manière à interrompre la préparation de la boisson si au bout d'une temporisation prédéterminée, de préférence après le début du déplacement relatif des première et deuxième pièces, l'interrupteur n'est pas actionné.

Selon un mode de réalisation, le système est configuré pour ramener les première et deuxième pièces ou autoriser leur amenée manuelle dans leur première position relative si au bout d'une temporisation prédéterminée après le début du déplacement relatif des première et deuxième pièces depuis leur première position l'interrupteur n'est pas actionné.

Selon un mode de réalisation, le système comprend un actionneur configuré pour rapprocher mutuellement les deux demi chambres formant ensemble la chambre d'infusion, le système étant configuré pour actionner l'actionneur de sorte à rapprocher les deux demi chambre uniquement si les première et deuxième pièces sont dans leur deuxième position relative.

Selon un mode de réalisation le système comporte au moins un actionneur permettant de déplacer mutuellement deux demi chambres formant une chambre d'infusion à l'intérieur de laquelle le conditionnement est destiné à être infusé lorsqu'il atteint la position d'infusion et comportant des moyens d'asservissement agencés de manière à empêcher le fonctionnement de l'actionneur si l'organe de détection de la première pièce bute contre un conditionnement.

Selon un mode de réalisation, le système l'actionneur est un vérin hydraulique associé à une pompe.

Selon un mode de réalisation, le système comprend une pompe configurée pour injecter de l'eau eau chaude dans la chambre d'infusion lorsque les deux demi chambres sont refermées, le système étant configuré pour actionner la pompe uniquement si la première pièce est dans la deuxième position.

Selon un mode de réalisation, le système comprend une chaudière configurée pour alimenter en eau chaude la chambre d'infusion, le système étant configuré pour désactiver le fonctionnement de la chaudière si au bout d'une durée prédéterminée la première pièce n'a pas atteint pas la deuxième position alors qu'un cycle de préparation de boisson a été enclenché.

Selon un mode de réalisation, le système comprend un interrupteur de fin de course configuré pour être actionné lorsque la première pièce est dans la deuxième position, le système étant configuré pour détecter que la première pièce est dans la position de fin de course de préférence uniquement lorsque les première et deuxième pièces sont dans leur deuxième position relative.

Selon un mode de réalisation, le système comprend un interrupteur configuré pour être actionné, de préférence uniquement, lorsque les première et deuxième pièces sont dans leur deuxième position relative. De préférence les première et deuxième pièces atteignent leur deuxième position relative lorsque la première pièce, mobile arrive en fin de course.

Selon un mode de réalisation, la deuxième pièce comprend une surface d'appui configurée pour maintenir le conditionnement en position lorsque la première pièce se déplace relativement à la deuxième pièce. Ladite surface d'appui forme ainsi une butée s'opposant au déplacement du conditionnement sous l'effet du déplacement relatif des première et deuxième pièces.

Selon un mode de réalisation, la deuxième pièce comprend un élément de guidage portant la surface d'appui et agencé de manière à guider le conditionnement lors de sa descente par gravité en vue de sa réception sur la première pièce.

Selon un mode de réalisation, l'élément de guidage est formé au moins en partie par une face interne d'une trémie formant un guide pour le conditionnement lors de sa réception sur la première pièce.

Selon un mode de réalisation, la deuxième pièce comprend une ouverture configurée pour permettre le passage de l'organe de détection.

Selon un mode de réalisation, l'organe de détection est configuré pour pénétrer dans une ouverture ménagée dans la deuxième pièce.

Selon un mode de réalisation, l'organe de détection est formé par un volet s'étendant transversalement à la direction de déplacement relative des première et deuxième pièces. L'organe de détection est porté par la première pièce. Il forme avec cette dernière une pièce monolithique. L'organe de détection est formé venu de matière avec la première pièce.

Selon un mode de réalisation, la première pièce est monolithique.

Selon un mode de réalisation, la au moins une zone de soutien forme une butée verticale, bloquant le déplacement du conditionnement sous l'effet de son poids.

Selon un mode de réalisation, la première pièce comporte au moins deux zones de soutien situées de part et d'autre d'un plan médian du système.
Le plan médian du système passe par l'axe de translation dans le cas où les première et deuxième pièces sont mobiles en translation.

Selon un mode de réalisation, la première pièce comporte au moins deux zones de soutien pour un conditionnement dans sa position de rétention, de préférence situées de part et d'autre d'un plan médian du conditionnement lorsque ce dernier est dans la position de rétention, la distance (d1, d2) entre les deux zones de soutien augmentant en direction de l'arrière de la première pièce, l'avant de la première pièce étant pris selon le sens de déplacement de la première pièce depuis la première position vers la deuxième position, la distance .

Selon un mode de réalisation, la première pièce présente une ouverture entre les zones de soutien, de manière à ce que le conditionnement puisse tomber par gravité à travers ladite ouverture entre les zones de soutien lorsque la deuxième pièce atteint la deuxième position.

Selon un mode de réalisation, le système comprend le conditionnement et:
- la distance d1 séparant les deux zones de soutien au niveau du conditionnement lorsque la première pièce est dans la première position est inférieure à la dimension du conditionnement de manière à empêcher ce dernier de passer entre les deux zones de soutiens et
- la distance d2 séparant les deux zones de soutien au niveau du conditionnement lorsque la première pièce est dans la deuxième position est supérieure à la dimension du conditionnement de manière à permettre à ce dernier de tomber par graviter entre les deux zones de soutiens.

Selon un mode de réalisation, le système comprend le conditionnement et les zones de soutien de la première pièce sont conformées de manière à ce qu'une portion P de la hauteur H du conditionnement soit située sous son contact avec les zones de soutien lorsque les première et deuxième pièces sont disposées dans la première position.

Selon un mode de réalisation, le système comprend le conditionnement et le système est configuré de manière à ce qu'une portion du conditionnement soit au regard de chacune des deux portions de chambre selon une direction horizontale lorsque les première et deuxième pièces sont dans la première position.

De préférence, les deux zones de soutien définissent un plan sensiblement horizontal.

Selon un mode de réalisation, P>0.15H, de préférence P>0.2H, de préférence P>0.3H, P et H étant mesurées verticalement.

Selon un mode de réalisation, la première pièce comprend à son extrémité inférieure au moins une zone de contact s'étendant verticalement vers le bas.

Selon un mode de réalisation, le système comprend la zone de contact forme une surface pleine s'étendant dans un plan sensiblement vertical et dont la surface est supérieure à égale à 0.5 cm².

Selon un mode de réalisation, le système comprend un bac à conditionnements configuré pour recueillir les conditionnements usagés après leur infusion. Ladite au moins une zone de contact se déplace à l'intérieur du dudit bac lors du déplacement de la première pièce. Ainsi le système étant configuré de manière à ce que la zone de contact entre au contact d'un conditionnement usagé présent dans le bac lorsque ce dernier est plein.

Selon un mode de réalisation, lequel ladite mobilité relative entre les première et deuxième pièces est une mobilité relative en translation, de préférence selon un axe horizontal.

Selon un mode de réalisation, les deux demi chambres admettent une mobilité relative en translation selon un axe parallèle à l'axe de translation relative des première et deuxième pièces. Selon un mode de réalisation, le système est configuré de manière à ce qu'en fin de coulissement, la première pièce soit escamotée, au moins en partie sous la deuxième pièce selon une direction verticale de manière à ce que le conditionnement puisse se déplacer sous l'effet de la gravité.

Alternativement, ladite mobilité relative entre les première et deuxième pièces est une mobilité relative en rotation.

Selon un mode de réalisation, les première et deuxième pièces sont respectivement mobile et fixe par rapport à un bâti du système.

Selon un mode de réalisation, le système est configuré de manière à ce que lorsque les premier et deuxième pièces passent de leur première à leur deuxième position relative, le conditionnement passe par gravité de la position de rétention à la position d'infusion.

Selon un mode de réalisation, la première pièce est solidaire de la zone de soutien configurée pour soutenir le conditionnement dans la position de rétention.

Selon un mode de réalisation, la première pièce est fixe par rapport à la zone de soutien configurée pour soutenir le conditionnement dans la position de rétention.

Selon un mode de réalisation, la zone de soutien configurée pour soutenir le conditionnement dans la position de rétention est solidaire de la première pièce. L'organe de détection est solidaire de la deuxième pièce. Ainsi la zone de soutien et l'organe de détection sont en mobilité relative, de préférence en translation.

Selon un mode de réalisation, dans la position de rétention le conditionnement est situé en dehors de la chambre d'infusion.

Selon un mode de réalisation, dans la position de rétention le conditionnement n'est pas situé entre les deux demi-chambres. En particulier il n'est pas situé entre les deux demi-chambres selon une direction correspondant à la direction de translation des deux demi-chambres ou au plan médian. Le plan médian du système passe par l'axe de translation dans le cas où les première et deuxième pièces sont mobiles en translation.

Selon un mode de réalisation, dans la position de rétention le conditionnement n'est pas situé en regard des deux demi-chambres. Dans la position de rétention le conditionnement est situé en dehors d'un espace délimité par les deux demi-chambres.

Ladite zone de soutien est configurée pour réceptionner le conditionnement dans la position d'infusion. Elle forme une butée gravitaire pour ce dernier. Selon un mode de réalisation, ladite zone de soutien n'est pas située en regard des deux demi-chambres. Ladite zone de soutien est située en dehors d'un espace délimité par les deux demi-chambres. Ladite zone de soutien n'est pas située entre les deux demi-chambres selon une direction correspondant à la direction de translation des deux demi-chambres ou au plan médian.

La zone de soutien est positionnée par rapport aux deux demi-chambres de manière à ce que lorsque les deux demi chambres sont en mobilité relative elles ne peuvent pas entrer en contact avec un conditionnement situé sur la zone de soutien.

La zone de soutien est positionnée par rapport aux deux demi-chambres de manière à être en dehors de la course suivie par les deux demi chambres lors de leur mobilité relative.

Selon un mode de réalisation, le système est configuré de manière à ce que dans la position d'infusion le conditionnement soit situé entre les deux demi-chambres. En particulier il est situé entre les deux demi-chambres selon une direction correspondant à la direction de translation des deux demi-chambres ou au plan médian.

Selon un mode de réalisation, dans la position d'infusion le conditionnement est situé en regard des deux demi-chambres. Dans la position de rétention le conditionnement est situé à l'intérieur d'un espace délimité par les deux demi-chambres. Les moyens de fermeture aval réceptionnent le conditionnement dans la position d'infusion. Ils forment une butée gravitaire pour le conditionnement. Les moyens de fermeture aval sont distincts de la zone de soutien. Ils sont situés en dessous de cette dernière.

La chambre d'infusion se définie comme la portion d'espace délimitée par les deux demi-chambres lors de leur mobilité relative ou lorsqu'elles sont au contact l'une de l'autre pour procéder à l'infusion.

Selon un mode de réalisation, les zones de soutien de la première pièce forment des moyens de fermeture amont agencés de manière à sélectivement empêcher ou à autoriser l'entrée du conditionnement dans la chambre d'infusion en fonction de la position relative de la première pièce par rapport à la deuxième pièce.

Selon un mode de réalisation, la première pièce comprend un élément de réception, formant moyens de fermeture aval et configuré pour :
- lorsque les première et deuxième pièces sont dans leur première position relative : stopper la descente du conditionnement depuis sa position de rétention et le maintenir dans sa position d'infusion à l'intérieur d'une chambre d'infusion ;
- lorsque les première et deuxième pièces sont dans leur deuxième position relative : autoriser la sortie du conditionnement hors de la chambre d'infusion.

Selon un mode de réalisation, les demi chambres sont agencées pour être mutuellement éloignées ou rapprochées afin de respectivement fermer ou ouvrir la chambre,

Selon un mode de réalisation, le système comprend un dispositif de fermeture comprenant : les moyens de fermeture amont solidaires de la première pièce, des moyens de fermeture aval agencés de manière à sélectivement empêcher ou à autoriser la sortie du conditionnement hors de la chambre,

Le dispositif de fermeture étant agencé pour passer alternativement :
- de ladite première position, le dispositif de fermeture étant agencé pour que dans ladite première position: les moyens de fermeture amont empêchent l'entrée du conditionnement dans la chambre, les moyens de fermeture aval autorisent la sortie du conditionnement hors de la chambre,
- à une deuxième position dans laquelle : les moyens de fermeture amont autorisent l'entrée du conditionnement dans la chambre en fin de course de la première pièce ; les moyens de fermeture aval permettent la réception du conditionnement introduite dans la chambre et empêchent la sortie de cette dernière hors de la chambre.

Selon un mode de réalisation, les moyens de fermeture amont et les moyens de fermeture aval sont solidaires.

Selon un mode de réalisation, le système comprend le conditionnement.

Selon un mode de réalisation, la première pièce présente au moins deux zones de soutien disposées au contact du conditionnement dans la position de rétention du conditionnement, la première pièce et le conditionnement sont conformés de manière à ce que :
- lorsque les première et deuxième pièces sont dans leur première position relative, les zones de soutient forment une butée empêchant la descente du conditionnement par gravité, la distance séparant les deux zones de soutient étant inférieure à la dimension du conditionnement au niveau des deux zones de soutien;
- lorsque les première et deuxième pièces sont dans leur deuxième position relative, les zones de soutient autorisent la descente du conditionnement par gravité, la distance séparant les deux zones de soutient étant supérieure à la dimension du conditionnement au niveau des deux zones de soutien.

Selon un mode de réalisation, l'invention porte sur une machine de préparation de boisson comprenant un système selon l'une quelconque des combinaison ci-dessus et une chaudière configurée pour chauffer un liquide destiné à infuser le conditionnement.

Selon un autre mode de réalisation, l'invention porte sur un système de production de boisson à partir d'un conditionnement comprenant un produit à infuser le système comprenant :
une première et une deuxième pièces présentant une mobilité relative et définissant en partie au moins un ensemble de réception destiné à réceptionner le conditionnement avant son positionnement dans une position d'infusion ;
dans lequel, la première pièce comporte au moins une zone de soutien configurée pour, lorsque les première et deuxième pièces sont dans une première position relative, entrer au contact du conditionnement de manière à soutenir le conditionnement dans une position de rétention empêchant la conditionnement d'atteindre la position d'infusion ;
dans lequel lorsque les première et deuxième pièces sont dans une deuxième position relative, la au moins une zone de soutien libère le passage du conditionnement permettant à ce dernier d'atteindre, de préférence par gravité, la position d'infusion. Le système comprend le conditionnement et est configuré de manière à ce qu'une portion du conditionnement soit au regard de chacune des deux portions de chambre selon une direction horizontale lorsque les première et deuxième pièces sont dans la première position, c'est-à-dire lorsque le conditionnement est dans sa position de rétention.

### BRÈVE DESCRIPTION DES FIGURES

D'autres caractéristiques, buts et avantages de la présente invention apparaîtront à la lecture de la description détaillée qui va suivre et au regard des dessins annexés donnés à titre d'exemples non limitatifs et sur lesquels :
- les figures 1a à 1g illustrent quelques étapes du déplacement d'un conditionnement dans un système selon l'invention lorsqu'aucun conditionnement préalablement inséré n'est bloqué dans le système, ces étapes étant vues en coupe. Plus en détail :
   La figure 1a illustre un système selon un exemple non limitatif de l'invention dans lequel le conditionnement est dans une position de rétention.
   La figure 1b illustre le système de la figure 1a dans lequel la première pièce avance et permet au conditionnement d'amorcer sa décente par gravité vers sa position d'infusion.
   La figure 1c illustre le système de la figure 1a dans lequel le conditionnement a atteint la position d'infusion, la chambre d'infusion étant encore ouverte.
   La figure 1d illustre le système de la figure 1a dans lequel la demi chambre mobile se rapproche de la demi chambre fixe pour refermer la chambre d'infusion.
   La figure 1e illustre le système de la figure 1a lequel la chambre d'infusion est fermée et le conditionnement peut être infusé.
   La figure 1f illustre le système de la figure 1a dans lequel la demi chambre mobile s'éloigne de la demi chambre fixe pour ouvrir la chambre d'infusion après infusion du conditionnement.
   La figure 1g illustre le système de la figure 1a dans lequel la première pièce se déplace pour escamoter les moyens de fermeture aval afin de permettre au conditionnement de sortir par gravité de la chambre d'infusion.
- les figures 2a à 2d illustrent une première pièce selon un exemple non limitatif de la présente invention. Plus en détail ces figures sont des vues respectivement : en perspective de l'avant, en perspective de l'arrière, de côté et du dessus de la première pièce.
- les figures 3a à 3d illustrent une deuxième pièce selon un exemple non limitatif de la présente invention. Plus en détail ces figures sont des vues respectivement : en perspective de l'avant, en perspective de l'arrière, de face et de côté de la deuxième pièce.
- les figures 4a à 4c illustrent quelques étapes du déplacement d'un conditionnement dans le système de la figure 1a lorsqu'un conditionnement préalablement inséré est bloqué dans le système, ces étapes étant vues en coupe. Plus en détail :

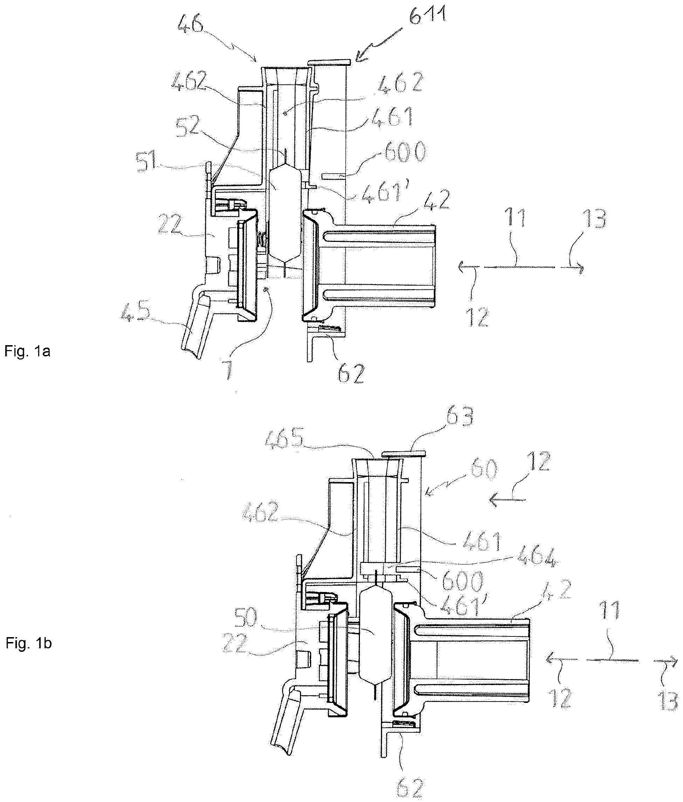

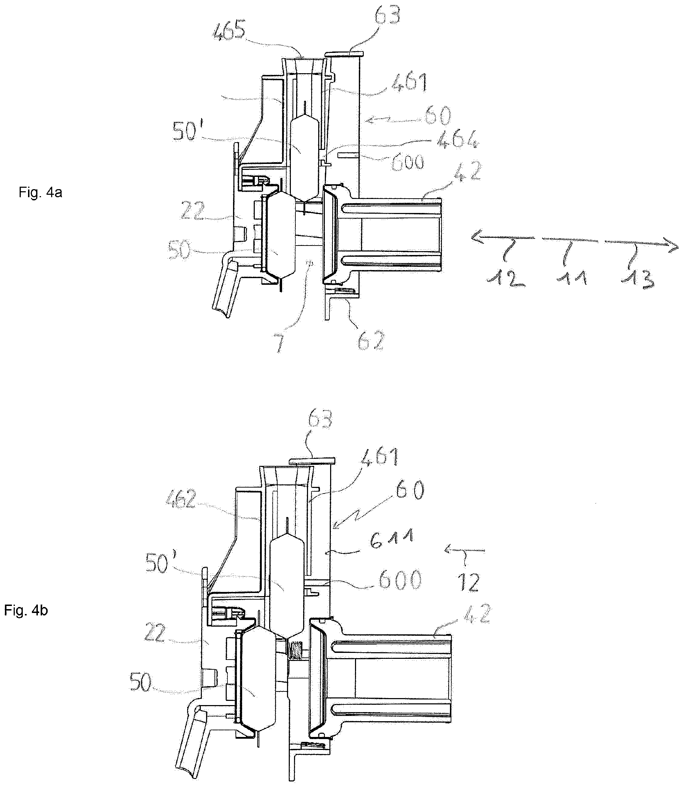

   La figure 4a illustre le système de la figure 1a dans lequel un premier conditionnement préalablement inséré dans le système est boqué dans la chambre et dans lequel un deuxième conditionnement est inséré dans le système et atteint sa position de rétention.
   La figure 4b illustre une étape dans laquelle la première pièce avance, le deuxième conditionnement amorce sa descente par gravité et vient se bloquer contre le premier conditionnement. Cette figure illustre également l'organe de détection, solidaire de la première pièce, qui vient buter contre le deuxième conditionnement. Le déplacement de la première pièce est donc stoppé.

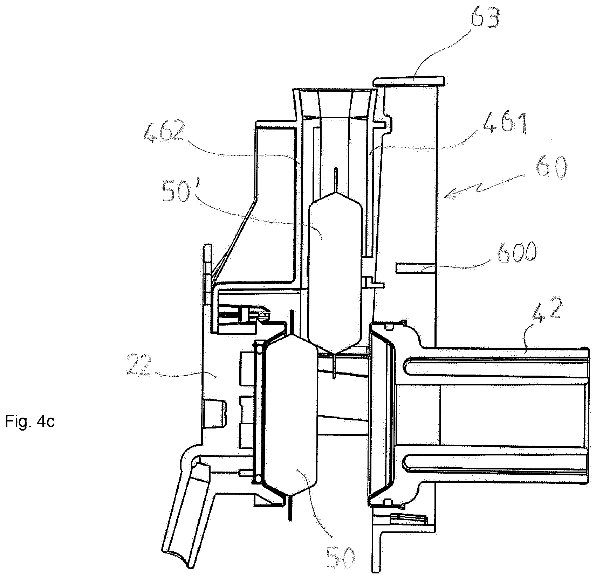

   La figure 4c illustre une étape dans laquelle la première pièce recule pour permettre de retirer le conditionnement coincée.

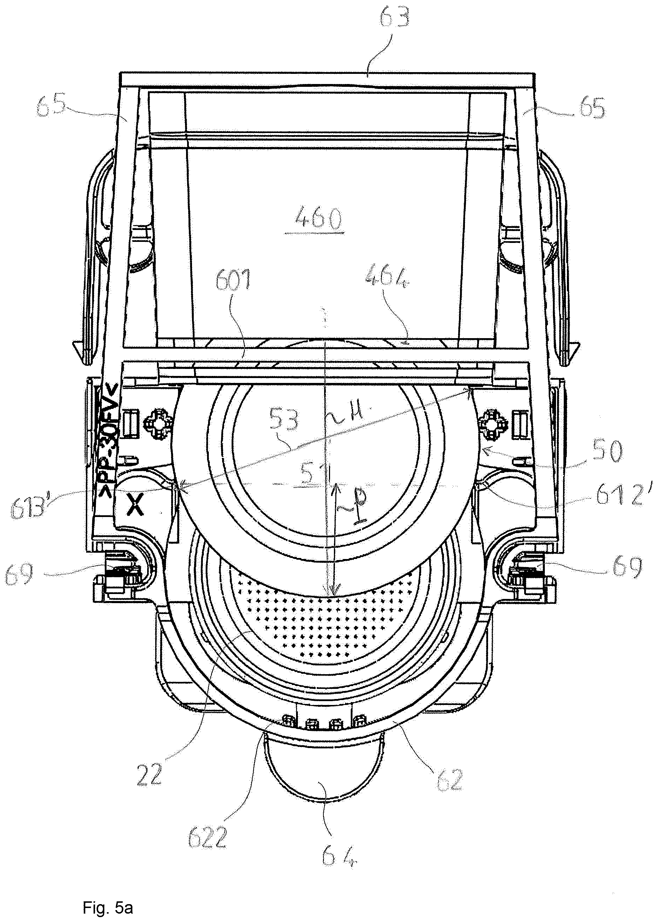

- les figures 5a à 5b sont deux vues d'un exemple non limitatif de système selon l'invention dans laquelle les zones d'appui de la première pièce permettent au conditionnement d'amorcer sa descente lors de l'avancée de la première pièce avant que l'organe de détection ne bute contre le conditionnement.

### DESCRIPTION DÉTAILLÉE DE L'INVENTION

En référence aux figures 1a à 1g, on a illustré un système 10 de préparation de boisson selon l'invention.

On qualifiera d'amont et d'aval les portions d'espace respectivement disposées avant et après un point considéré relativement au trajet normal d'un conditionnement dans la machine lors d'un cycle de préparation d'une boisson.

Dans le cadre de la présente invention, on peut utiliser des conditionnements 50 enfermant un produit à infuser, par exemple la mouture de café. Le produit à infuser est enfermé dans un volume 51 intérieur fermé du conditionnement. Le volume intérieur est configuré pour pouvoir être traversé par un liquide tel que l'eau lors de l'infusion. Il est par exemple délimité par des nappes filtrantes ou par une paroi en un matériau étanche mais rendue filtrante par perforation. Le conditionnement comprend un pourtour 52. Préférentiellement, le volume 51 fermé enfermant le produit à infuser présente une symétrie axiale et le pourtour 52 est compris dans un plan perpendiculaire à l'axe de symétrie.

De manière non limitative le volume 51 enfermant le produit à infuser est constitué par l'assemblage de couches jointes par leurs périphéries au niveau d'une armature de support définissant un pourtour 52 périphérique. Avantageusement, la présente invention est utilisable avec des types variés de conditionnements. Elle n'implique notamment pas que le pourtour du conditionnement soit rigide. Elle s'applique aux conditionnements présentant une enveloppe extérieure souple de type dose ou rigide de type capsule et plus généralement à tout type de conditionnement à usage unique de produit à infuser. Elle s'applique également aux conditionnements dont l'enveloppe extérieure est apte à disparaître au moins en partie lors de l'infusion, par dissolution par exemple. Elle s'applique encore aux conditionnements formés d'un produit à infuser agrégé par un liant et/ou par l'application d'une pression. Un tel conditionnement formé d'un agrégat de produit à infuser tel que le café peut être constituée en dehors de la machine ou être constituée par un module dédié de la machine.

Le système 10 selon l'invention comporte une chambre 7 d'infusion destinée à recevoir un conditionnement 50. La chambre 7 comprend deux portions de chambres agencées pour être mutuellement éloignées ou rapprochées par un actionneur afin de respectivement fermer ou ouvrir la chambre 7 d'infusion.

On désignera par demi chambres des pièces aptes à être disposées en contact mutuel ou au contact d'un conditionnement 50 pour former un volume étanche faisant office de chambre 7 d'infusion. L'invention n'implique en aucune manière que les deux portions de chambre présentent mutuellement une quelconque symétrie.

Dans l'exemple de réalisation présenté, l'une des portions de chambre, désignée première portion de chambre 42 ou portion mobile, est portée par un actionneur autorisant le rapprochement et l'éloignement mutuels des portions de chambre. L'autre portion de chambre, désignée par la suite deuxième portion de chambre ou portion fixe 22, est solidaire d'un bâti de la machine. Chacune des portions de chambre présente une extrémité définissant un pourtour contenu dans un plan sensiblement perpendiculaire à l'axe longitudinal 11.

On désignera par la suite axe longitudinal 11 ou direction longitudinal 11 la direction comprenant la direction principale de l'actionneur. On qualifiera de sens avant 12 le sens, selon cet axe longitudinal 11 contribuant au rapprochement mutuel des deux portions de chambre et on qualifiera de sens arrière 13, le sens selon cet axe longitudinal 11 permettant un éloignement mutuel des deux portions de chambre. La direction longitudinale 11, le sens avant 12 et le sens arrière 13 sont représentés en figure 1a.

Selon un exemple de réalisation non limitatif, la première portion de chambre 42 présente un conduit d'alimentation connecté à des moyens d'alimentation en fluide à infuser, typiquement de l'eau chaude. De manière conventionnelle, les moyens d'alimentation forment un circuit d'eau chaude comportant un réservoir, une chaudière permettant d'augmenter la température de l'eau du réservoir jusqu'à une température souhaitée en vue de son infusion dans la chambre 7, ainsi qu'une pompe permettant d'élever la pression de l'eau dans le circuit. Lors de l'infusion, les deux portions de chambre 42, 22 sont maintenues fermement au contact l'une de l'autre et délimitent un volume étanche de réception du conditionnement 50. L'étanchéité peut être réalisée par application des pourtours des deux portions de chambre sur le pourtour du conditionnement 50 qui fait alors office de joint. L'étanchéité peut également être assurée ou être renforcée des moyens d'étanchéité rapportés.

La deuxième portion de chambre 22 comporte un conduit d'évacuation 45 de boisson en communication fluidique d'une part avec l'intérieur de la chambre 7 d'infusion et avec une sortie de boisson d'autre part. Ce conduit d'évacuation 45 est destiné à assurer l'évacuation de la boisson résultant de l'infusion du conditionnement 50, vers un contenant tel qu'une tasse à café.

Après infusion, lorsque la première portion de chambre 42 est éloignée de la deuxième portion de chambre 22, la chambre 7 d'infusion est ouverte, le conditionnement 50 déjà infusé n'est alors plus enserrée dans la chambre 7. Ce conditionnement 50 est évacué de la chambre 7 par gravité et tombe dans un bac de récupération.

De manière particulièrement avantageuse mais non limitative, le système est configuré de sorte que les moyens d'alimentation en fluide de la chambre 7 et l'actionneur de la chambre 7 sont disposés du même côté de la chambre 7. De manière encore plus avantageuse, les moyens d'alimentation et l'actionneur sont disposés en arrière de la chambre 7.

Ainsi, aucun organe d'alimentation de la chambre ou d'actionnement ne doit être disposé en avant de la deuxième portion 22. Cela permet de raccourcir la distance séparant la tasse de la chambre 7. Les pertes thermiques lors de l'acheminement de la boisson sont donc réduites, améliorant de ce fait la qualité de la boisson obtenue. En outre, la répétitivité de la qualité est améliorée puisque les pertes lors de l'acheminement de la boisson ne différents que légèrement selon l'utilisation de la machine. De plus, l'encombrement de la machine est réduit.

De préférence, l'actionneur entraînant la première portion 42 de chambre est un vérin. Le vérin comprend un piston. La première portion 42 de chambre est portée par le piston du vérin. Le vérin est alimenté en fluide sous pression par la pompe. Le système comprend des moyens de rappel du vérin comprenant un ressort de rappel configuré pour assurer le retour vers l'arrière 13 du piston en position rétractée lorsque la pression baisse dans la chambre de poussée du vérin.

Selon un autre mode de réalisation, la première portion 42 de chambre est un actionneur manuel, actionnable par l'utilisateur. Il peut par exemple s'agir d'un levier monté en rotation sur le bâti de la machine et qui présente une poignée actionnable par l'utilisateur. Par exemple le système peut comprendre une genouillère pour transformer la rotation du levier en une translation de la première portion 42 de chambre.

### Première 611 et deuxième 46 pièces

Le système 10 comporte également une première pièce 611 formant un dispositif de fermeture 60. Ce dispositif de fermeture 60 comporte des moyens de fermeture amont 61 également désignés élément de fermeture amont. Il est distinct de chacune des portions de chambre 22, 42 formant la chambre 7 d'infusion.

Les moyens de fermeture amont 61 sont agencés de manière à faire office de butée d'arrêt escamotable. Ils sont disposés en amont de la chambre 7 d'infusion.

Dans une position non escamotée les moyens de fermeture amont 61 empêchent l'accès d'un conditionnement 50 à sa position d'infusion dans la chambre 7 d'infusion.

Dans cette position non escamotée les moyens de fermeture amont 61 assurent également la réception et participent au maintien en position d'un conditionnement 50 introduite dans le système 10. Lorsqu'il est maintenu par les moyens de fermeture amont 61, le conditionnement est dans une position dite de rétention. Il repose sur une zone de soutien 612, 613 qui sera décrite plus en détail par la suite.

Ladite zone de soutien 612, 613 est configurée pour réceptionner le conditionnement dans la position d'infusion. Elle forme une butée gravitaire pour ce dernier lors de son introduction dans le système. Selon un mode de réalisation, ladite zone de soutien 612 n'est pas située en regard des deux demi-chambres 22, 42. Elle est située en dehors d'un volume délimité par les deux demi-chambres 22, 42 et occupé par les deux demi chambres 22, 42 lors de leur déplacement. Ainsi le conditionnement, lorsqu'il est dans la position de rétention est situé en dehors de ce volume. Ladite zone de soutien 612 n'est pas située entre les deux demi-chambres 22, 42 selon une direction correspondant à la direction de translation des deux demi-chambres 22, 42 ou au plan médian. Ainsi, la zone de soutien 612 est positionnée par rapport aux deux demi-chambres 22, 42 de manière à être en dehors de la course suivie par ces deux demi chambres lors de leur mouvement relatif pour fermer la chambre d'infusion.

En position escamotée les moyens de fermeture amont 61 autorisent l'introduction d'un conditionnement 50 dans la chambre 7 depuis l'amont de cette dernière.

Selon le mode de réalisation illustré, mais de manière optionnelle seulement, le dispositif de fermeture 60 comporte des moyens de fermeture aval 62, également désignés élément de fermeture aval. Les moyens de fermeture aval 62 sont disposés en aval de la chambre 7 d'infusion. Ils sont agencés de manière à faire office de butée d'arrêt escamotable pour un conditionnement 50 introduit dans la chambre 7.

Dans une position non escamotée les moyens de fermeture aval 62 assurent la réception d'un conditionnement 50 introduit dans la chambre 7 alors que celle-ci est ouverte, et empêchent l'éjection par gravité de ce conditionnement 50 vers l'aval de la chambre 7. Le conditionnement 50 est réceptionné par une surface 622 de réception portée par les moyens de fermeture aval 62.

Dans cette position les moyens de fermeture aval 62 interdisent également toute intrusion dans la chambre 7 depuis l'aval de cette dernière. Ainsi l'utilisateur ne peut pas, par exemple, introduire ses doigts dans la chambre 7.

Dans une position escamotée, les moyens de fermeture aval 62 ne forment pas une butée d'arrêt pour un conditionnement 50 introduit dans la chambre 7 et permettent donc l'évacuation d'un conditionnement 50, de préférence par gravité, lors de l'ouverture de la chambre 7.

La chambre d'infusion se définie comme la portion d'espace délimitée par les deux demi-chambres 22, 42 lors de leur mouvement relatif ou lorsqu'elles sont au contact l'une de l'autre pour procéder à l'infusion. Ainsi la demi-chambre mobile évolue dans la chambre d'infusion au fur et à mesure de son déplacement. Ainsi la chambre d'infusion peut être ouverte ou fermée.

Dans la position ouverte de la chambre d'infusion, si le conditionnement 50 est retenu par la zone de soutien 612, alors elle est située, de préférence entièrement, en dehors dans la chambre 7 d'infusion. Dans la position ouverte de la chambre d'infusion, si le conditionnement 50 est retenu par la surface 622 de réception portée par les moyens de fermeture aval 62, alors elle est située dans la chambre 7 d'infusion.

Le système 10 est agencé de manière à faire passer le dispositif de fermeture 60 alternativement d'une première position dans laquelle les moyens de fermeture amont 61 empêchent qu'un conditionnement 50 entre entièrement dans la chambre 7, et les moyens de fermeture aval 62 assurent qu'aucun conditionnement 50 usagé ne demeure présent dans la chambre 7, à une deuxième position dans laquelle les moyens de fermeture amont 61 autorisent l'entrée d'un conditionnement 50 dans la chambre 7 et les moyens de fermeture aval 62 permettent la réception et le maintien d'un conditionnement 50 dans la chambre 7 en position d'infusion.

Le dispositif de fermeture 60 est agencé de manière à ce que la position des moyens de fermeture amont 61 conditionne la position des moyens de fermeture aval 62, et à ce que la position des moyens de fermeture aval 62 conditionne la position des moyens de fermeture amont 61.

Ainsi, pour une position donnée des moyens de fermeture amont 61, les moyens de fermeture aval 62 n'admettent qu'une seule position et inversement. Le système présente donc un fonctionnement séquentiel.

Les moyens de fermeture amont 61 et les moyens de fermeture aval 62 sont solidaires. Cette caractéristique contribue à simplifier la cinématique, à améliorer la robustesse et à limiter le coût de revient et le taux de défectuosité du système 10. Le dispositif de fermeture 60 formant une seule pièce définit ainsi une bague.

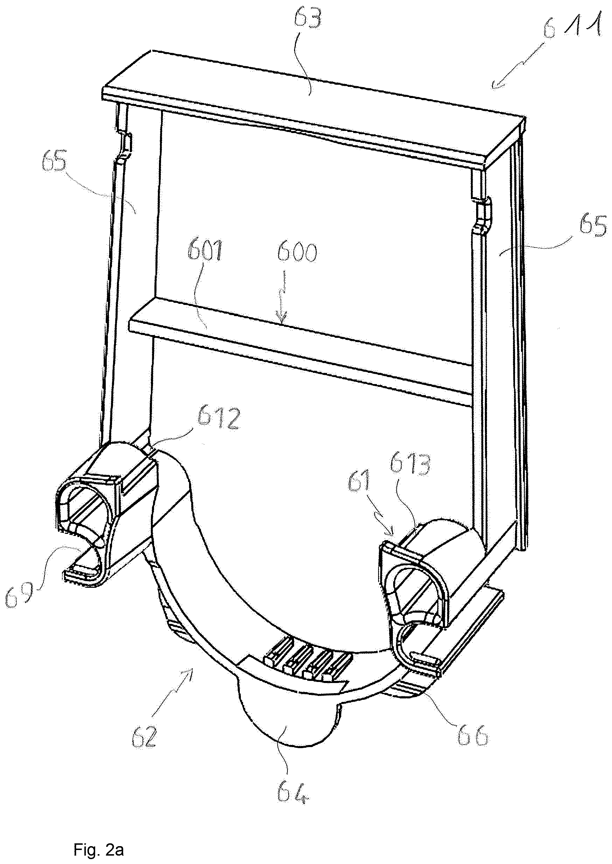

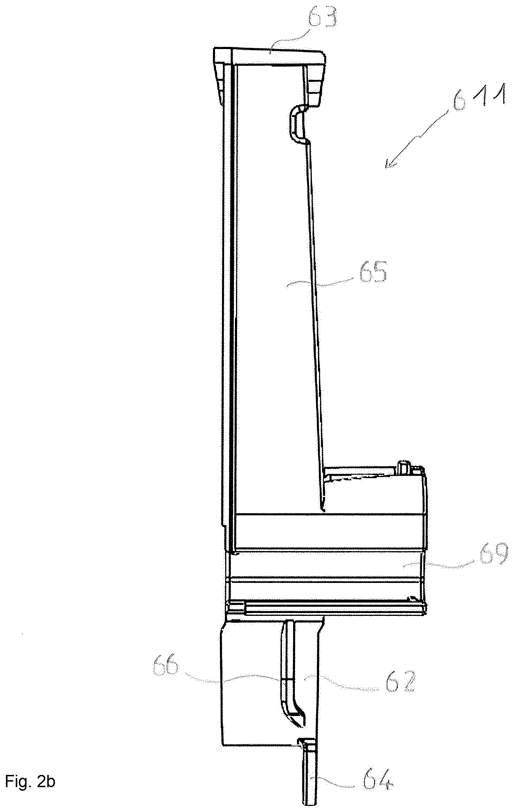

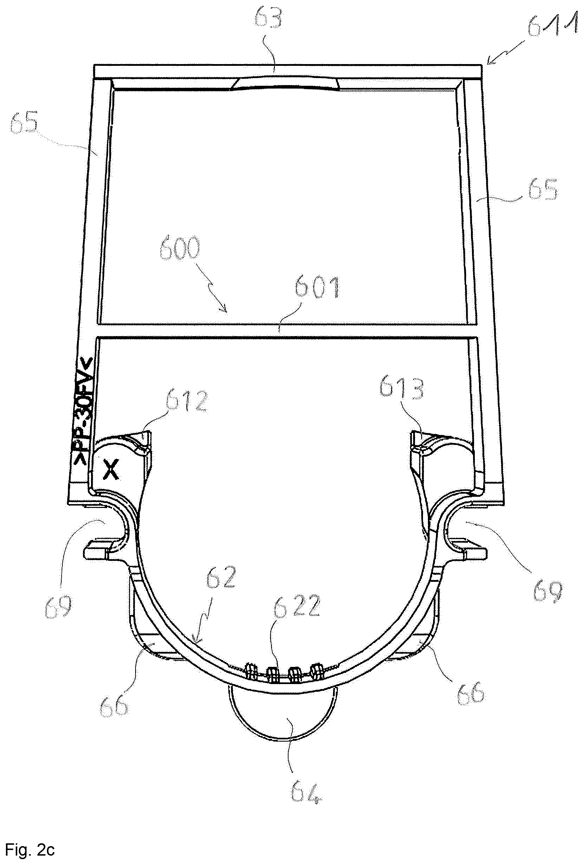

Les figures 2a à 2d laissent apparaître en détail le dispositif de fermeture 60 selon cet exemple de réalisation. Ce dispositif de fermeture 60 comprend :
- un organe de guidage agencé de manière à guider le dispositif de fermeture 60 dans son déplacement alternatif entre la première et la deuxième position. De préférence, l'organe de guidage comprend deux coulisseaux 69 aptes à assurer le guidage en translation du dispositif de fermeture 60 le long de deux rails 48 s'étendant selon deux axes de guidage parallèles à l'axe longitudinal 11 et qui sont de préférence portés par une deuxième pièce 46 qui sera en détail par la suite,
- deux bras 65, 65 s'étendant chacun depuis un coulisseau 69 respectif et dans une direction sensiblement perpendiculaire à l'axe de guidage,
- un volet 63 s'étendant transversalement pour joindre les deux bras 65. Le volet forme avantageusement un organe d'obstruction dont la fonction sera décrite par la suite.
- des moyens de fermeture amont 61 agencés de manière à faire office de butée d'arrêt pour un conditionnement 50 en amont de la chambre 7 lorsque le dispositif de fermeture 60 est disposé dans la première position. De manière avantageuse, les moyens de fermeture amont 61 comprennent deux zones de soutien 612, 612 disposées de part et d'autre d'un plan médian du conditionnement 50.
- des moyens de fermeture aval 62 agencés de manière à faire office de butée d'arrêt pour un conditionnement 50 en aval de la chambre 7 lorsque le dispositif de fermeture 60 est disposé dans la deuxième position. De manière avantageuse, les moyens de fermeture aval 62 présentent une forme de portion de couronne. Ils portent une surface de réception 622 du conditionnement centrée.

Par ailleurs, les moyens de fermeture amont 61 et aval 62 sont disposés de manière à présenter un décalage mutuel selon la direction principale de déplacement du dispositif de fermeture 60. Ainsi, dans la deuxième position les moyens de fermeture amont 61 sont disposés sensiblement en avant de la deuxième portion de chambre 22 et les moyens de fermeture aval 62 sont disposés sensiblement en arrière de la deuxième portion de chambre 22. Dans la première position les moyens de fermeture amont 61 et les moyens de fermeture aval 62 sont disposés sensiblement en arrière de la deuxième portion de chambre 22.

Les dimensions de ce décalage sont choisies de manière à ce que :
- lorsque le dispositif de fermeture 60 est disposé dans la première position, les moyens de fermeture amont 61 empêchent qu'un conditionnement 50 entre entièrement dans la chambre 7, et les moyens de fermeture aval 62 autorisent la sortie d'un conditionnement 50 usagé hors de la chambre 7,
- lorsque le dispositif de fermeture 60 est disposé dans la deuxième position les moyens de fermeture amont 61 autorisent l'entrée d'un conditionnement 50 dans la chambre 7, les moyens de fermeture aval 62 permettent la réception et le maintien d'un conditionnement 50 introduite dans la chambre 7.

Ainsi dans cet exemple le dispositif de fermeture 60 étant monté coulissant sur l'axe longitudinal 11, les moyens de fermeture amont 61 et aval 62 présentent un décalage mutuel selon l'axe longitudinal 11. Les moyens de fermeture amont 61 sont disposés en avant des moyens de fermeture aval 62 selon ce même axe.

Le système 10 comporte des moyens d'actionnement permettant le passage alternatif de la première à la deuxième position. Ce sont les mêmes moyens d'actionnement qui agissent à la fois sur les moyens de fermeture amont 61 et sur les moyens de fermeture aval 62.

Le système 10 permet par conséquent de limiter considérablement les risques de coincement des conditionnements.

Le nombre d'actionneurs étant réduit, la complexité de la structure du système 10 s'en trouve significativement limitée. Cette structure permet une simplification de la cinématique des organes permettant de passer alternativement de la première à la deuxième position.

Au moins un ressort d'écartement, travaillant de préférence en compression, tend à pousser le dispositif de fermeture 60 vers la première portion 42 de chambre 7 et à rapprocher le dispositif de fermeture 60 de la tête du vérin. Le ressort d'écartement repousse donc le dispositif de fermeture 60 vers l'arrière 13.

Le déplacement vers l'avant du dispositif de fermeture 60 ainsi que l'enclenchement du déplacement du dispositif de fermeture 60 dans un sens ou dans l'autre seront décrits plus en détail par la suite.

Le dispositif de fermeture 60 est entraîné par un dispositif d'entraînement non illustré.

De préférence, comme illustré en figures 2a à 2c, le dispositif de fermeture 60 comprend au moins une et de préférence au moins deux portions 66 formant butées. La portion 66 sert à accoupler la première pièce 611 avec le dispositif d'entrainement mécanique de ladite la première pièce 611 supporté par la partie fixe du module d'infusion de la machine. Des doigts moteurs, non illustrés et appartenant au dispositif d'entrainement, sont configurés pour venir en appui sur ces deux portions 66. Lors des cycles de préparation de la boisson, ces doigts entrainent en translation horizontale la première pièce 611.

De préférence la première pièce comprend deux portions 66 réparties de chaque côté de l'axe de déplacement pour former une paire de butée.

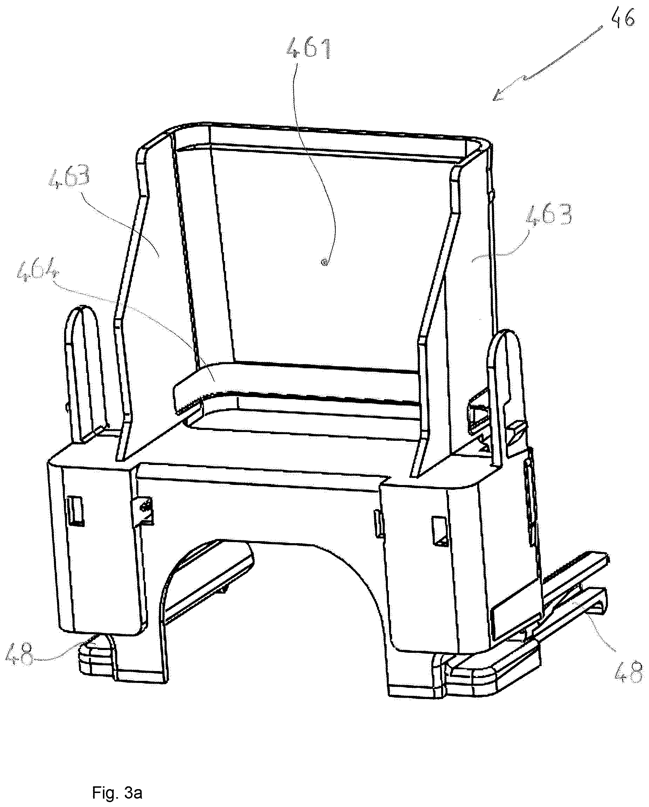

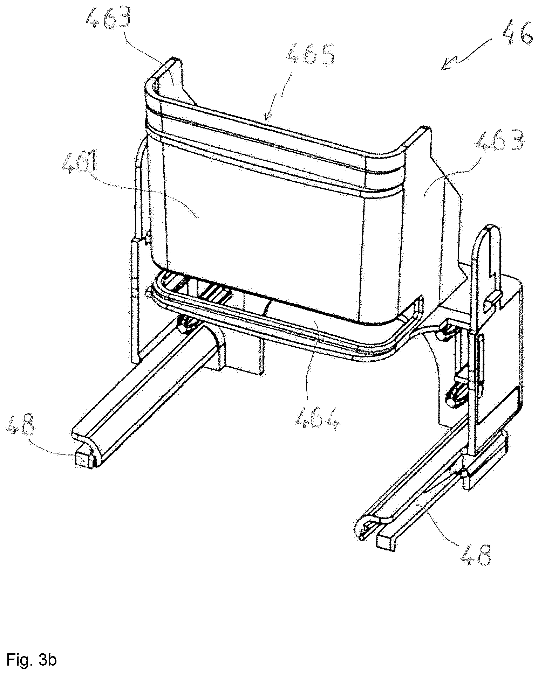

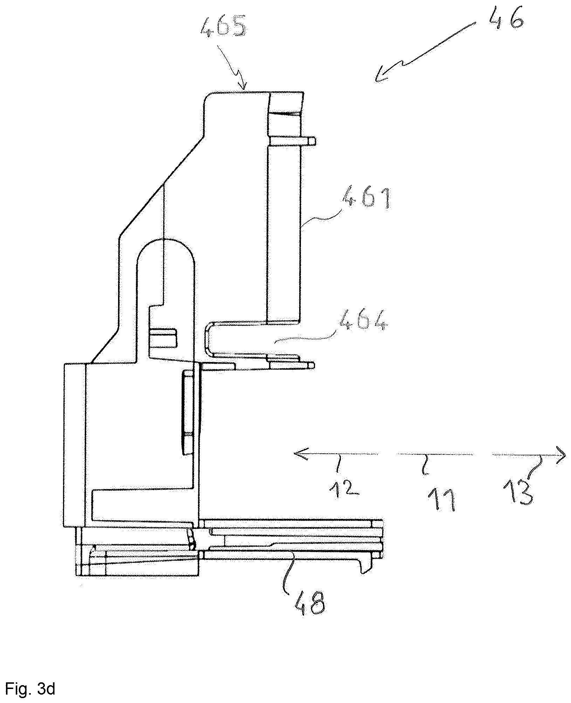

Le système 10 comporte également une deuxième pièce 46 formant moyens de guidage. Cette deuxième pièce 46 est illustrée en détail aux figures 3a à 3d. Cette deuxième pièce 46 présente sensiblement la forme d'un manchon complémentaire de la forme de la section du conditionnement 50. Elle est configurée pour empêcher tout mouvement significatif du conditionnement 50 dans un plan horizontal, et à autoriser son déplacement vertical. Ils font office de trémie.

Selon le mode de réalisation illustré, cette deuxième pièce 46 formant moyens de guidage est solidaire du bâti 20. Elle est donc fixe. De préférence, elle est montée sur la deuxième portion 22 de chambre ou sur une pièce solidaire de cette dernière ou du bâti. Ils sont agencés de manière à assurer le guidage du conditionnement 50 en amont des moyens de fermeture amont 61. Ils présentent ainsi deux surfaces de guidage latérales 463 qui limitent le déplacement du conditionnement dans un plan perpendiculaire à l'axe de translation 11.

Par ailleurs, les moyens de guidage de cette deuxième pièce 46 sont longitudinalement disposés de manière à être disposés au droit de l'ouverture de la chambre 7 dans la deuxième position afin d'autoriser l'introduction d'un conditionnement 50 dans cette dernière lorsque les moyens de fermeture amont 61 sont escamotés. Plus précisément, ils sont positionnés au droit des moyens de fermeture aval 62 lorsque ces derniers sont dans la deuxième position. Ils guident ainsi la descente du conditionnement 50 jusque dans la chambre 7.

Par ailleurs, ils sont verticalement disposés de manière à être suffisamment proches des moyens de fermeture amont 61 pour assurer le maintien du conditionnement 50 dans sa position de rétention lorsque cette dernière repose sur les moyens de fermeture amont 61. Ainsi, lorsqu'un conditionnement 50 repose sur les moyens de fermeture amont 61 et que ces derniers translatent vers l'avant, les moyens de guidage contribuent à empêcher toute translation longitudinale significative du conditionnement 50. Ils présentent à cet effet une surface d'appui 462 formant une butée longitudinale configurée pour s'opposer au déplacement du conditionnement 50. Dans le mode de réalisation illustré la première pièce 611 comportant les moyens de fermeture 60 coulisse par rapport à la deuxième pièce 46, la surface d'appui 462 bloque alors le coulissement du conditionnement 50 selon l'axe longitudinal 11. Comme indiqué ci-dessus la deuxième pièce 48 comporte des rails 48 sur lesquels coulissent les coulisseaux 69 de la première pièce 611.

De préférence et comme illustré en la figure 1a la deuxième pièce 46 présente une autre surface d'appui 461 faisant face à la surface d'appui 462 pour maintenir le conditionnement longitudinalement vers l'arrière. De préférence, les surfaces d'appui 461 et 462 se rejoignent par des portions formant de part et d'autre de l'axe de coulissement deux surfaces de guidage latéral 463 pour le conditionnement. Les surfaces 461, 462 et 462 définissent un passage d'entrée 465 pour le conditionnement 50 et forment ensemble la trémie.

Cette deuxième pièce 46 formant moyens de guidage est maintenue au regard de l'ouverture de la chambre 7 d'infusion lorsque les moyens de fermeture amont 61 sont totalement escamotés. Le mouvement relatif du dispositif de fermeture 60 et des moyens de guidage permet ainsi le transfert du conditionnement 50 depuis les moyens de fermeture amont 61 à la chambre 7. Par ailleurs, ce mouvement relatif permet de protéger l'intégrité du conditionnement 50 lors de ce transfert. Ce guidage du conditionnement est clairement illustré en figures 1a à 1 à 1g.

Dans un mode de réalisation alternatif non illustré où la deuxième pièce 46 coulisse par rapport aux moyens de fermeture 60 fixes, la surface d'appui 462 pousse le conditionnement selon l'axe longitudinal 11 et la fait coulisser sur la pièce 661 formant les moyens de fermeture amont 61.

Ces moyens de guidage permettent de maintenir en position un conditionnement 50 reposant sur les moyens de fermeture amont 61 de manière à faciliter la mise en place de ce conditionnement 50 dans la chambre 7. Optionnellement, les moyens de guidage présentent deux rainures sensiblement parallèles et verticales, définies par les surfaces 463 et destinées à coopérer avec le pourtour du conditionnement 50 afin d'améliorer le guidage de cette dernière.

### Trappe

Le système 10 comprend également une trappe définissant une ouverture disposée en amont des moyens de fermeture amont 61 et en amont des moyens de guidage 46. L'ouverture de la trappe est disposée longitudinalement de manière à être située au droit des moyens de guidage 46. Ils sont ainsi positionnés au droit des moyens de fermeture amont 61 lorsque le dispositif de fermeture 60 est disposé dans la première position. L'ouverture définit par la trappe est accessible par un utilisateur et est destinée à recevoir un conditionnement 50 pour son introduction dans le système 10.

Les moyens de guidage étant fixes par rapport à la trappe, l'invention supprime tout risque de coincement d'un conditionnement ou de tout autre objet tel qu'un doigt entre les moyens de guidage et la trappe.

Le volet 63 du dispositif de fermeture 60 forme un organe d'obstruction agencé de manière à :
- obstruer l'ouverture de la trappe lorsque le dispositif de fermeture 60 est disposé dans la deuxième position,
- laisser libre l'ouverture de la trappe lorsque le dispositif de fermeture 60 est disposé dans la première position.

Avantageusement, le dispositif de fermeture 60 est formé d'une pièce unique venue de matière. Le dispositif de fermeture 60 pourra par exemple être constitué en aluminium, en acier inoxydable ou encore en plastique.

### Organe de détection des conditionnements coincés

De manière particulièrement avantageuse, la première pièce 611 comporte un organe de détection 600 configuré pour buter sur un conditionnement 50' qui ne serait pas tombé par gravité dans la chambre 7 d'infusion lorsque les moyens de fermeture amont 61 libèrent l'entrée de la chambre 7 d'infusion.

Par exemple un conditionnement 50' peut rester bloqué dans sa position de rétention ou entre la position de rétention et sa position d'infusion si un autre conditionnement 50 préalablement inséré dans la machine n'a pas été éjecté en fin d'infusion. Cela peut notamment survenir du fait du plaquage qui intervient lors de l'infusion entre l'une des portions 22, 42 de la chambre d'infusion 7 et le conditionnement 50. Un tel cas est illustré en figures 4a à 4c qui seront décrites plus en détail par la suite.

L'organe de détection 600 de présence d'un conditionnement 50' non transféré à la chambre 7 d'infusion se déplace lors de l'avancée de la première pièce 611 de manière à balayer une partie au moins de la portion d'espace dans lequel est maintenu un conditionnement 50 dans sa position normale de rétention. Ainsi, typiquement, l'organe de détection 600 est verticalement disposé au-dessus des zones de soutien 612, 613 du conditionnement 50 dans sa position normale de rétention. Cette portion d'espace configurée pour être occupée par le conditionnement 50 dans sa position de rétention est définie par les première 611 et deuxième 46 pièces.

L'organe de détection 600 est par ailleurs disposé plus vers l'arrière 13 que les zones de soutien 612, 613 selon l'axe longitudinal 11.

L'organe de détection 600 ne pénètre pas dans ladite portion d'espace lorsque la première pièce 611 est dans la première position. Ainsi, l'organe de détection 600 n'entre pas au contact du conditionnement lorsque la première pièce 611 est dans la première position.

En revanche elle pénètre dans ladite portion d'espace lors de son passage de la première à la deuxième position. Pour cela elle pénètre dans la deuxième pièce 46.

A cet effet, on prévoit avantageusement que la deuxième pièce 46 présente une ouverture 464 pour le passage de l'organe de détection 600.

De préférence cette ouverture 464 est formée dans la paroi de la surface d'appui 461 formant en partie la trémie. Cette ouverture 464 est clairement visible en figures 3a à 3d.

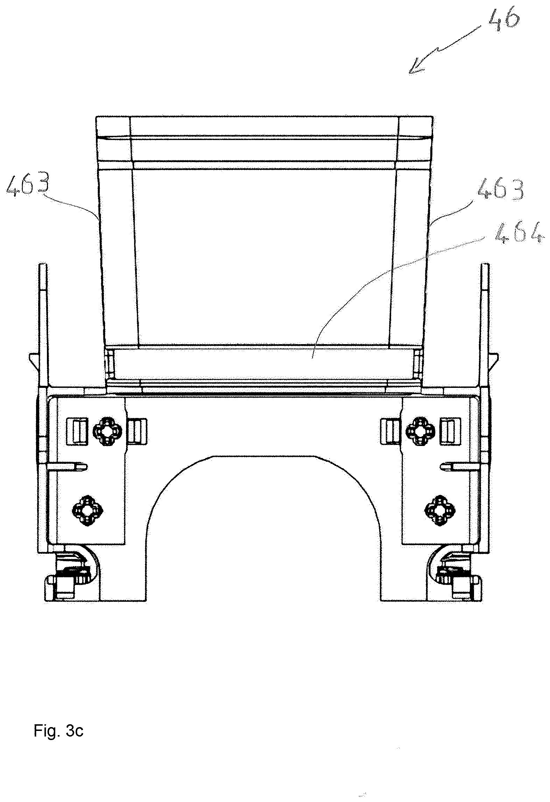

De préférence, et comme illustré sur les figures 3a et 3c, l'organe de détection 600 est formé par un volet 601 s'étendant d'un bras 65, 65 à l'autre. Cela permet à l'organe de détection 600 de balayer toute la dimension transversale de l'espace dans lequel un conditionnement 50' est susceptible d'être bloqué.

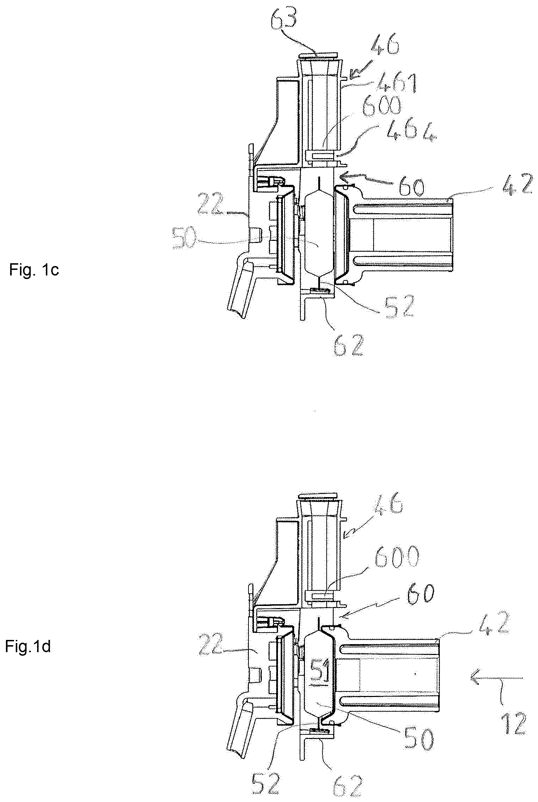

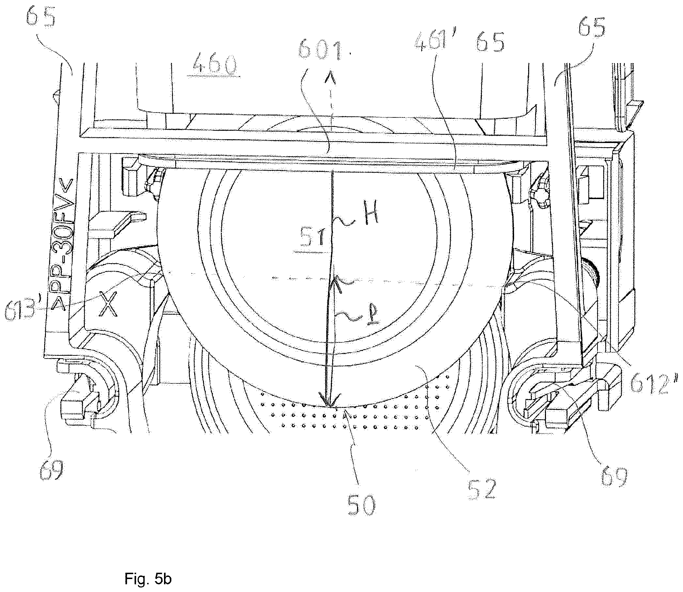

De préférence, l'organe de détection 600 et l'ouverture 464 présentent des formes complémentaires comme cela apparait en figures 1c, 5a et 5b par exemple.

L'invention ne se limite pas aux formes de l'organe de détection 600 et de l'ouverture 464 illustrées sur les figures.

Si aucun conditionnement 50 ne reste bloqué entre sa position de rétention et sa position d'infusion lors de l'avancée de la première pièce 611, alors l'organe de détection 600 ne bute sur aucun élément et permet à la première pièce 611 d'atteindre la deuxième position.

Le système est configuré de manière à ce que le cycle de préparation de la boisson ne se poursuive qu'à la condition que la première pièce 611 atteigne effectivement la deuxième position. Un capteur de présence ou un micro interrupteur actionné par la première pièce 611 lors de son arrivée à la deuxième position peut par exemple être prévu pour signaler à un module de gestion du système le bon positionnement de la première pièce.

Si cet interrupteur ou ce capteur de présence signale le positionnement de la première pièce 611 dans la deuxième position, alors le module de gestion autorise la poursuite du cycle dont par exemple :
- l'activation de l'actionneur, tel qu'une pompe, pour déplacer la portion mobile 42 de la chambre d'infusion 7.
- l'activation de la pompe pour amener l'eau chaude depuis la chaudière jusqu'à la chambre d'infusion 7.

En revanche, si au bout d'une temporisation prédéterminée après le début de l'avancée de la première pièce 611, celle-ci n'est pas détectée dans la deuxième position, alors le module de gestion en déduit que l'organe de détection 600 a buté contre un conditionnement et que ce dernier est coincé. Dans ce cas le module de gestion peut déclencher l'une ou plusieurs des actions suivantes :
- déplacement vers l'arrière de la première pièce 611. Ainsi, les première 611 et deuxième 43 pièces s'éloignent mutuellement. L'utilisateur ou un opérateur peuvent alors accéder au conditionnement bloqué 50' afin de le retirer de la machine ;
- mise en veille ou arrêt de la pompe ;
- mise en veille ou arrêt de la chaudière ;
- envoi d'un signal d'erreur, par exemple à l'utilisateur ou à un module de réception distant de la machine, afin de signaler ce disfonctionnement. Par exemple ce signal peut être un signal lumineux ou une instruction affichée sur un écran porté par la machine ;
- mise en veille ou arrêt de la machine.

L'invention permet ainsi d'améliorer considérablement la fiabilité de ce type de machines, notamment lorsqu'un conditionnement 50' reste bloqué du fait de la présence d'un autre conditionnement 50 qui n'a pas été convenablement éjecté en fin d'infusion.

### Zones de soutien en position de rétention

De manière avantageuse, les zones de soutien 6112, 613 sur lesquelles repose le conditionnement 50 dans sa position de rétention sont conformés de manière à présenter un écartement qui augmente en direction de l'arrière de la première pièce 611.

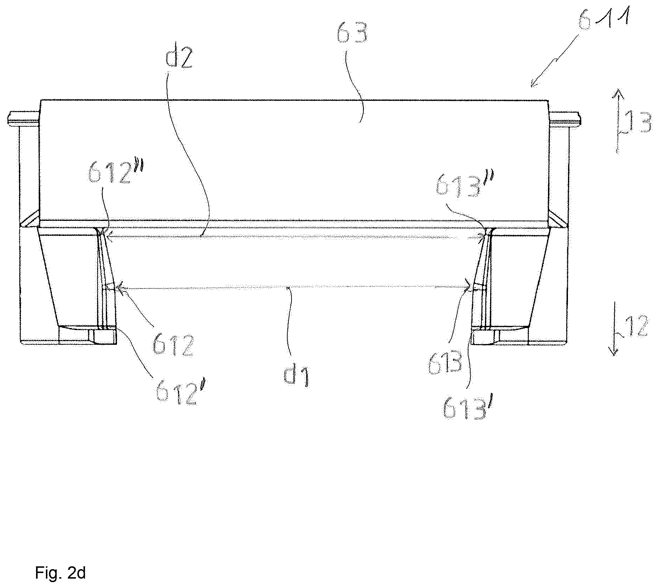

Ainsi, sur une première portion s'étendant longitudinalement selon l'axe de translation 11, la distance entre les zones de soutien 612 et 613 est égale ou inférieure à d1. d1 est illustrée en figure 2d. Les extrémités 612', 613' avant des zones de soutien 6112, 613 sont séparées de la distance d1.

La distance d1 est inférieure à la dimension maximale du conditionnement 50 prise horizontalement dans un plan vertical contenant les deux zones de soutien 612, 613 au niveau de leur l'appui avec le conditionnement 50. Ainsi, le conditionnement ne peut pas tomber par gravité entre les deux zones de soutien 612, 613.

Sur une deuxième portion s'étendant longitudinalement selon l'axe de translation 11 et qui est placée en arrière de la première portion, la distance entre les zones de soutien 612 et 613 augmente et est supérieure à d1. Les extrémités longitudinales des zones de soutien, référencée 612" et 613", sont ainsi séparées d'une distance d2 illustrée en figure 2d.

La distance d2 est supérieure à la dimension maximale Dmax du conditionnement prise horizontalement dans un plan vertical contenant les deux zones de soutien 612, 613 au niveau de leur l'appui avec le conditionnement 50. Ainsi, le conditionnement 50 peut passer entre les deux zones de soutien 612, 613 et tomber par gravité. A cet effet une ouverture est prévue entre les deux zones de soutien 612, 613 pour que le conditionnement 50 puisse tomber par gravité.

Ainsi, d1 <Dmax et d2>Dmax. De préférence, d2>1.05 d1.

De préférence le conditionnement 50 présente une forme arrondie au moins sur son pourtour au contact des zones de soutien 612, 613. De préférence il présente un pourtour circulaire dont le centre est verticalement situé au-dessus des zones de soutien 612, 613, ces dernières étant situées de part et d'autre d'une droite verticale passant par le centre du pourtour. Dans ce cas d1 et d2 sont respectivement inférieur et supérieur au diamètre 53 du pourtour 52.

Cette structure des zones de soutien permet au conditionnement 50 d'amorcer sa descente lorsque la première pièce 611 a débuté son déplacement mais avant que les zones de soutien 612, 613 ne soient totalement escamotées au regard du conditionnement 50. Autrement dit, le conditionnement 50, qui reste sensiblement fixe car maintenu par la deuxième pièce 46 lors du déplacement de la première pièce 611, coulisse sur les zones de soutien 612, 613 et ainsi descend par gravité.

Cela présente pour avantage que le conditionnement passe plus rapidement de sa position de rétention à sa position d'infusion pour un même déplacement de la première pièce 611. On évite ainsi que l'organe de butée 600 ne vienne buter contre un conditionnement 50 alors que ce dernier est en train de descendre dans la chambre d'infusion 7 lorsque cette dernière n'est pas encombrée par un conditionnement bloqué. En revanche si un conditionnement 50' est bloqué par un autre conditionnement 50 coincé en aval, l'organe de détection 600 bute très rapidement contre le conditionnement 50', c'est-à-dire peu de temps avant le début de son déplacement depuis la première position de la première pièce 600.

Les figures 5a et 5b illustre un mode de réalisation dans lequel zones de soutien 612, 613 de la première pièce 611 sont conformées de manière à ce qu'une portion P de la hauteur H du conditionnement soit située en dessous de son contact avec les zones de soutien 612, 613 lorsque les première 611 et deuxième 46 pièces sont disposées dans la première position donc lorsque le conditionnement 50 est dans la position de rétention), avec de préférence P>0.15H, de préférence P>0.2H, de préférence P>0.3H, de préférence P>0.4H, P et H étant mesurées verticalement. P et H sont illustrées en figures 5a et 5b. P et H sont mesurées verticalement en passant par le centre du conditionnement 50. Sur l'exemple illustré, P est environ égal à 0.4H.

Ainsi une portion seulement du conditionnement 50 est verticalement située sous les zones de soutien 612, 613 alors que le conditionnement 50 est dans la position de rétention.

De préférence une portion seulement du conditionnement 50 est située dans la chambre d'infusion 7 alors que le conditionnement 50 est dans la position de rétention comme illustré en figure 5a et 5b.

A cet effet les zones de soutien 612, 613 sont verticalement situées suffisamment proches de la chambre d'infusion pour qu'un conditionnement qui repose sur les zones de soutien 612, 613 soit déjà en partie dans la chambre d'infusion.

Ainsi, avant le début du cycle le conditionnement est déjà en partie engagé dans la chambre d'infusion. Une portion du conditionnement est au regard de chacune des deux portions 22, 42 de chambre selon une direction parallèle à l'axe 11.

Par conséquent, dès le début de l'avancée de la première pièce 611, le conditionnement 50, déjà en partie dans la chambre d'infusion 7, coulisse sur les zones de butées 612, 613 jusqu'à ce que l'écartement entre ces dernières soit suffisant pour que le conditionnement chute par gravité.

Il n'y a donc pas de risque que l'organe de détection 600 bute contre ce conditionnement 50 si la chambre d'infusion est vide et disponible. En revanche si une dose préalablement insérée est coincée dans la chambre d'infusion l'organe de détection 600 bute contre le conditionnement 50' inséré en second lieu. Le cycle d'infusion est alors stoppé.

### Zone de contact 64 pour la détection de remplissage maximal du bac à conditionnements usagés et/ou l'actionnement manuelle de la première pièce 611

Selon un mode de réalisation avantageux et facultatif, la première pièce 611c comprend une zone de contact 64. Cette zone 64 est illustrée en figures 2a-2c.

Cette zone peut avoir une ou avantageusement plusieurs fonctions.

Une première fonction que peut avoir cette zone 64 est d'identifier que le bac à conditionnements usagés est plein. La machine comprend un bac à conditionnements configurés pour recevoir, de préférence par gravité, les conditionnements après leur sortie de la chambre d'infusion 7, c'est-à-dire lorsqu'ils ont été infusés et qu'ils sont usagés.

Le bac à conditionnements usagés est situé sous la chambre d'infusion. Il n'est pas illustré sur les figures.

Lorsque ce bac est plein l'utilisateur doit le retirer de la machine pour le vider.

S'il est plein et que l'utilisateur ne le vide pas, cela peut entrainer un coincement du système lors de l'introduction dans la machine d'un prochain conditionnement ou lors d'un prochain cycle de préparation de boisson. Un tel coincement peut être délicat à débloquer.

Afin d'éviter d'effectuer un cycle complet de préparation de boisson lorsque le bac est déjà plein, on prévoit la zone de contact 64 qui est configurée pour entrer au contact d'un conditionnement usagé disposé au sommet de l'amoncellement de conditionnements usagés présents dans le bac.

La zone de contact 64, lors de son déplacement, entre au contact d'un tel conditionnement usagé et bloque ainsi le déplacement de la première pièce 611.

La première pièce 611 ne peut alors pas parvenir en fin de course et actionner son interrupteur. Le module de gestion en déduit ainsi que la première pièce 611 est bloquée. La machine se met alors en défaut.

De préférence la zone de contact 64 s'étend en partie au moins verticalement vers le bas. Cela permet ainsi que cette zone 64 bute sur un conditionnement usagé avant que ce dernier n'entre au contact des zones de soutien ou d'un conditionnement porté par la première pièce 611 ce qui pourrait rendre le décoincement plus délicat.

Ainsi la forme s'étendant vers le bas de la zone de contact 64 permet d'anticiper la détection de bac à conditionnements plein en surbaissant la zone de détection.

De préférence cette zone de contact 64 forme une portion de disque, telle qu'une demi-lune. Le système est configuré pour qu'une partie au moins de la zone de contact 64 se déplace à l'intérieur du bac à conditionnements lors d'une partie au moins du déplacement de la première pièce 611 et de préférence tout au long du déplacement de la première pièce 611. Ainsi la zone de contact 64 permet une détection précoce du remplissage maximal du bac.

Par ailleurs, cette zone de contact 64 est configurée pour offrir une surface d'appui importante sur les conditionnements usagés, afin d'éviter de les endommager. Cette surface importante réduit localement la contrainte exercée par la zone de contact 64 sur le conditionnement usagé lors de l'avancée de la première pièce 611. Or ce dernier est souvent très fragile après avoir subi le cycle d'infusion. La forme de la zone de contact 64, présentant une surface pleine, de portion de disque comme sur l'exemple non limitatif illustré, permet ainsi de réduire le risque de déchirement du conditionnement lors de l'avancée de la première pièce 611. D'autres formes de zone de contact peuvent naturellement être envisagées sans sortir du cadre de l'invention.

Enfin, cette zone de contact peut présenter avantageusement une autre fonction. Le système est configuré pour permettre la préhension de la zone de contact 64 par un l'utilisateur afin d'actionner manuellement la première pièce 611. Ainsi l'utilisateur peut faire descendre un éventuel conditionnement coincé.

La zone de contact 64 s'étend principalement dans un plan.

Ce plan est de préférence vertical. Ce plan présente avantageusement une surface suffisante pour être aisément poussé ou saisi par un ou deux doigts d'un utilisateur. De préférence ce plan présente une surface supérieure ou égale à 0.5cm² et de préférence supérieure ou égale à 1cm², et de préférence de l'ordre de 1.5cm².

### Cycle sans conditionnement coincé

En référence aux figures 1a à 1g les étapes principales d'un cycle de fonctionnement sans conditionnement coincé vont maintenant être décrites.

L'utilisateur introduit un conditionnement 50 dans l'ouverture de la trappe. Ce conditionnement 50 tombe par gravité en étant guidée et en étant maintenue en position sensiblement verticale par les moyens de guidage de la deuxième pièce 46, typiquement par les surfaces de guidage 463, les surfaces d'appui 461 et 462. Le déplacement par gravité de ce conditionnement 50 est interrompu par les zones de soutien 162, 163 des moyens de fermeture amont 61 disposés au regard de l'ouverture de la trappe et du passage d'entrée 465 de la deuxième pièce 46. Ces moyens de fermeture amont 61 empêchent au conditionnement 50 d'entrer entièrement à l'intérieur de la chambre 7. Ce dernier ne peut donc pas atteindre sa position d'infusion. Néanmoins, selon le mode de réalisation non limitatif décrit précédemment en référence aux figures 5a et 5b, une portion du conditionnement 50 est de préférence déjà présent dans la chambre d'infusion 7 lorsque le conditionnement 50 est dans cette position de rétention. Cette phase est illustrée en figure 1a et 1b.

Dans une étape ultérieure illustrée aux figures 1b à 1g, l'utilisateur commande l'actionnement du dispositif de fermeture. Ce dernier est alors libre de coulisser vers l'avant sous l'effet du dispositif d'entraînement non représenté agissant sur les portions 66,66 formant butées. Lors de ce déplacement, les moyens de fermeture amont 61 de la première pièce 611 se déplacent vers l'avant 12 et les moyens de guidage de la deuxième pièce 46, fixés au bâti, maintiennent le conditionnement 50 au droit de l'ouverture de la chambre 7. Au fur et à mesure de leur déplacement vers l'avant, les moyens de fermeture amont 61 libèrent l'ouverture de la chambre 7. Plus précisément la distance séparant les zones de soutien 612, 613 sur laquelle repose le conditionnement 50 augmente. Cette phase est illustrée en figure 1b.

Lors de cette phase l'organe de détection 600 pénètre dans l'espace où était présent le conditionnement 50 avant sa descente. L'organe de détection 600 ne bute sur aucun conditionnement 50 et l'avancée de la première pièce 611 n'est pas stoppée.

Par ailleurs lors de cette phase d'avancée de la première pièce 611, les moyens de fermeture aval 62 obstruent progressivement l'ouverture de la chambre 7 en aval de cette dernière. Lorsque l'ouverture de la chambre 7, dégagée par les moyens de fermeture amont 61 est suffisamment importante, le conditionnement 50 s'introduit entièrement dans la chambre 7, par gravité, où il est réceptionnée par la surface de réception 622 des moyens de fermeture aval 62 formant une butée d'arrêt. Le conditionnement est alors en position d'infusion. Les première 611 et deuxième 46 pièces sont dans leur deuxième position relative. Cette phase est illustrée en figure 1c.

La première pièce 611 ayant atteint la deuxième position, il active un micro interrupteur ou un capteur de présence et le module de gestion peut poursuivre le cycle de préparation de la boisson.

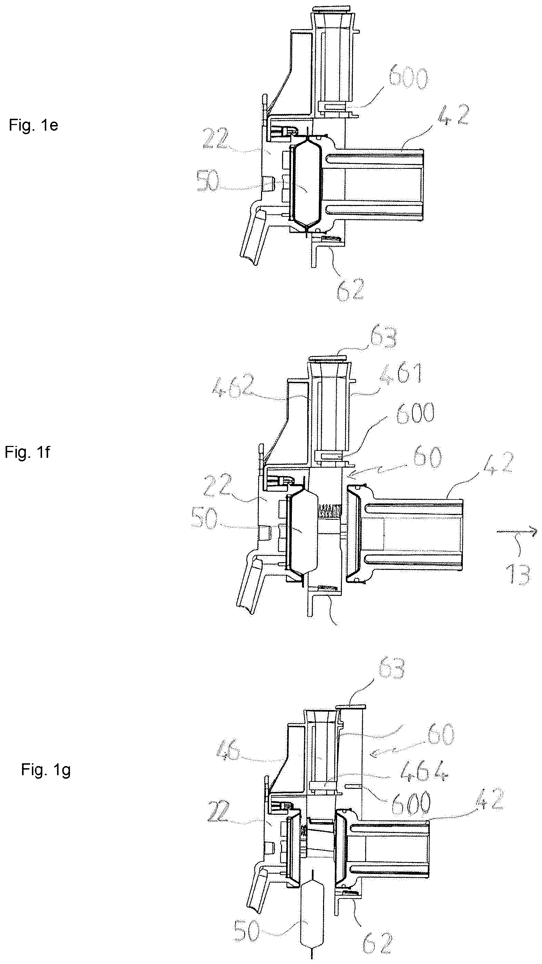

Notamment, la portion mobile 42 se rapproche de la portion fixe 22 comme illustré en figure 1d, jusqu'à refermer complètement la chambre comme illustré en figure 1 e.

Ce déplacement de la portion mobile 42 peut être entrainé par un vérin piloté par le module de gestion ou peut être entrainé manuellement par l'utilisateur.

Par ailleurs, le module de gestion commande l'injection de l'eau chaude dans la chambre d'infusion 7.

Une fois l'infusion terminée, la portion mobile 42 s'éloigne de la portion fixe 22 comme illustré en figure 1f, jusqu'à ouvrir la chambre d'infusion 7. Le dispositif d'entraînement non représenté et agissant sur la première pièce 611 autorise le retrait vers l'arrière 13 de cette dernière. La première pièce 611 regagne la première position autorisant la libération du conditionnement 50 hors de la chambre 1. Cette phase est illustrée en figure 1g.

Les deux portions 22, 42 en forme de coupelles assurent sensiblement un guidage du conditionnement 50 vers l'ouverture de la chambre 7 lorsqu'elles s'éloignent mutuellement. Le dispositif de fermeture 60 est ramené jusqu'à la première position : les moyens de fermeture aval 62 n'entravent plus l'éjection du conditionnement 50 et cette dernier peut alors être évacuée vers le bac de récupération de la chambre 7 par gravité. Cette phase est illustrée en figure 1g. Par ailleurs, le volet 63 d'obstruction laisse l'ouverture de la trappe libre et un nouveau conditionnement 50 peut être inséré dans le système 10.

Avantageusement, l'invention présente un fonctionnement qui offre une répétitivité améliorée de la qualité de la boisson obtenue et une plus grande fiabilité, les risques de blocage du mécanisme et de dégradation de l'intégrité du conditionnement étant réduits.

### Cycle avec conditionnement coincé

En référence aux figures 4a à 4c les étapes principales d'un cycle de fonctionnement avec un conditionnement 50 coincé vont maintenant être décrites.

La figure 4a est identique à la figure 1a, à l'exception qu'un premier conditionnement 50, inséré préalablement à un deuxième conditionnement 50, est resté coincé dans la chambre d'infusion 7 à l'issue du cycle précédent. Par exemple, et comme illustré en figure 4a, ce premier conditionnement 50 reste plaqué contre l'une des deux portions de chambre 22, 42 même après l'ouverture de la chambre d'infusion 7 et le retour vers l'arrière 13 de la première pièce 611. Cela est par exemple dû à la combinaison de l'effort de plaquage des deux portions 22, 42 sur le conditionnement 50 et à l'effet de collage provoqué par l'interface humide entre la portion fixe 22 et le conditionnement 50.

Ainsi le deuxième conditionnement 50', inséré dans la deuxième pièce 46 formant guidage, bute contre le premier conditionnement 50 lors de sa descente par gravité.

Lorsque l'utilisateur déclenche le cycle de préparation de boisson, la première pièce 611, avance 612 comme pour la figure 4b. En revanche et contrairement à la figure 4b, l'organe de détection 600 bute contre le deuxième conditionnement 50' qui n'est pas suffisamment descendu car coincé par le premier conditionnement 50 et stoppe l'avancée de la première pièce 611. Le deuxième conditionnement 50' est effet positionné encore au regard de l'ouverture 464 lorsque l'organe de détection 600 pénètre à travers cette ouverture 464.

La première pièce 611 ne peut alors pas terminer sa course et atteindre la deuxième position relative entre première 611 et deuxième 46 pièce. La première pièce 611 ne peut donc pas actionner l'interrupteur ou le capteur de fin de course. Le module de gestion comprend alors, au bout d'une temporisation, que le cycle de préparation de la boisson doit être interrompu.

Le module de gestion met alors fin au cycle de préparation de la boisson. Notamment il ne commande pas l'avancée de la portion mobile 42 de la chambre d'infusion 7 et ne commande pas l'injection d'eau chaude sous pression.

Avantageusement, le module de gestion commande le retour vers l'arrière 13 de la première pièce 46 comme illustré en figure 4c.

De préférence, la machine se met alors en défaut. Elle peut par exemple envoyer à l'utilisateur un signal d'alerte. L'utilisateur peut évacuer manuellement les conditionnements 50, 50' coincés dans le système.

L'invention apporte ainsi une solution robuste et particulièrement efficace pour améliorer la fiabilité des systèmes de production de boisson.

De nombreuses variantes peuvent être apportées au dispositif décrit précédemment sans sortir pour autant du cadre de l'invention.

Notamment, on pourra prévoir que le dispositif de fermeture 60 soit agencé de manière à translater suivant une direction principale différente de celle de l'axe longitudinal 11, comme par exemple une direction principale horizontale et perpendiculaire à l'axe longitudinal 11. Pour un tel dispositif de fermeture 60 les moyens de fermeture amont et aval d'un tel dispositif sont décalés selon cette direction principale.

L'actionnement du dispositif de fermeture 60 est assuré par un moteur électrique ou de manière manuelle.

L'adaptation du système 10 décrit précédemment à des conditionnements différents de celui représenté sur les figures peut être effectuée aisément en modifiant les dimensions et la configuration des moyens de fermeture amont et aval de la première pièce 611, des moyens de guidage de la deuxième pièce 46, de l'ouverture de la trappe ainsi que des deux demi chambres 22, 42.

L'invention n'est pas limitée aux modes de réalisation décrits mais s'étend à tout mode de réalisation entrant dans la portée des revendications.

L'invention s'étend notamment aux systèmes dans lesquels la première pièce 611 ne comprend que des moyens de fermeture amont sans moyens de fermeture aval. Elle s'étend également aux systèmes dans lesquels la position des moyens de fermeture aval ne conditionne pas la position des moyens de fermeture amont et inversement.

L'invention s'étend aux systèmes dans lesquels le canal d'alimentation de la chambre peut être porté par la chambre mobile. L'invention s'étend également aux systèmes dans lesquels le canal d'alimentation est porté par un élément du bâti ou par la demi-chambre fixe 22.

Dans l'exemple illustré et décrit en détail, les moyens de guidage de la deuxième pièce 46 sont fixes par rapport au bâti et les moyens de fermeture amont sont mobiles par rapport au bâti.

L'invention s'étend également aux systèmes dans lesquels la première pièce 611 est fixe par rapport au bâti et la deuxième pièce 46 et ses moyens de guidage sont mobiles par rapport au bâti. Ainsi, la surface d'appui 462 de la deuxième pièce 46 est mobile en translation. Les zones d'appui 612, 613 et l'organe de détection 600 de la première pièce 611 sont alors fixes et forment par exemple chacune un rail sur lequel le conditionnement 50 coulisse en étant entraînée par le déplacement de la surface d'appui 462 portée par les moyens de guidage 46.

L'invention s'étend à tout type de surface d'appui 462.

L'organe de détection 600 formant buté peut être formé partout type d'organe apte à entrer au contact du conditionnement 50' pour s'opposer au coulissement axial de la première pièce 611 en cas de présence d'un conditionnement coincé.

**REFERENCES**

| | | | |
|---|---|---|---|
| | | 61. | Moyens de fermeture amont |
| 10. | Système | 612. | Zone d'appui |
| 11. | Axe longitudinal | 612'. | Zone d'appui |
| 12. | Sens avant | 613. | Zone d'appui |
| 13. | Sens arrière | 613'. | Zone d'appui |
| 22. | Demi-chambre fixe | 62. | Moyens de fermeture aval |
| 24. | Conduit d'arrivée | 622. | Surface de réception du conditionnement |
| 42. | Demi-chambre mobile | | |
| 45. | Conduit d'évacuation | 63. | Volet d'obstruction |
| 46. | Moyens de guidage | 64. | Zone de contact pour la détection du remplissage maximal du bac à conditionnements usagés et/ou l'actionnement manuel de la première pièce. |
| 46. | Deuxième pièce | | |
| 461. | Surface d'appui | | |
| 462. | Surface d'appui | | |
| 463. | Surface de guidage latéral | 65. | Bras |
| 464. | Ouverture | 66. | Butée |
| 465. | Passage d'entrée | 69. | Coulisseau |
| 48. | Rail | 600. | Organe de détection |
| 50. | Conditionnement | 7. | Chambre |
| 50'. | Conditionnement | | |
| 51. | Volume contenant le produit à infuser | | |
| 52. | Pourtour du conditionnement | | |
| 53. | Diamètre | | |
| 60. | Dispositif de fermeture | | |
| 611. | Première pièce | | |

## Revendications

1. Système (10) de production de boisson à partir d'un conditionnement (50) comprenant un produit à infuser le système (10) comprenant :
deux demi chambres (22, 42) formant ensemble une chambre d'infusion (7) à l'intérieur de laquelle le conditionnement (50) est destiné à être infusé lorsqu'il atteint une position d'infusion ;
une première (611) et une deuxième (46) pièces présentant une mobilité relative et définissant en partie au moins un ensemble de réception (611, 46) destiné à réceptionner le conditionnement (50) avant son positionnement dans une position d'infusion à l'intérieur de la chambre d'infusion (7),
dans lequel, la première pièce (611) comporte au moins une zone de soutien (612, 613) configurée pour, lorsque les première (611) et deuxième (46) pièces sont dans une première position relative, stopper le déplacement de préférence par gravité du conditionnement et entrer au contact du conditionnement (50) de manière à soutenir le conditionnement (50) dans une position de rétention empêchant le conditionnement (50) d'atteindre la position d'infusion ; dans leur première position relative les première (611) et deuxième (46) pièces définissant ainsi une portion d'espace destinée à accueillir le conditionnement (50) dans la position de rétention ;
dans lequel lorsque les première (611) et deuxième (46) pièces sont dans une deuxième position relative, la au moins une zone de soutien (612, 613) libère le passage du conditionnement (50) permettant à ce dernier d'atteindre la position d'infusion ;
**caractérisé en ce que** le système comprend un organe de détection (600) solidaire de la première pièce (611) est conformé pour :
- pénétrer dans ladite portion d'espace destinée à accueillir le conditionnement (50) dans sa position de rétention lors du déplacement relatif des première (611) et deuxième (46) pièces et avant que les première (611) et deuxième (46) pièces atteignent leur deuxième position relative ;
- être absent de ladite portion d'espace destinée à accueillir le conditionnement (50) dans sa position de rétention lorsque les première (611) et deuxième (46) pièces sont dans leur première position relative.

2. Système (10) selon la revendication précédente dans lequel le système comprend un interrupteur configuré pour être actionné lorsque les première (611) et deuxième (46) pièces sont dans leur deuxième position relative et configuré de manière à interrompre la préparation de la boisson si au bout d'une temporisation prédéterminée l'interrupteur n'est pas actionné.

3. Système (10) selon l'une quelconque des revendications précédentes comprenant :
- une pompe configurée pour injecter de l'eau eau chaude dans la chambre d'infusion (7) lorsque les deux demi chambres (22, 42) sont refermées, le système étant configuré pour actionner la pompe uniquement si la première pièce (611) est dans la deuxième position, et/ou
- une chaudière configurée pour alimenter en eau chaude la chambre d'infusion (7), le système étant configuré pour désactiver le fonctionnement de la chaudière si au bout d'une durée prédéterminée la première pièce (611) n'a pas atteint pas la deuxième position alors qu'un cycle de préparation de boisson a été enclenché,
et/ou
- un interrupteur de fin de course configuré pour être actionné lorsque la première pièce (611) est dans la deuxième position, le système étant configuré pour détecter que la première pièce (611) est dans la position de fin de course lorsque les première (611) et deuxième (46) pièces sont dans leur deuxième position relative.

4. Système (10) selon l'une quelconque des revendications précédentes, dans lequel la deuxième pièce (46) comprend une surface d'appui (462) configurée pour maintenir le conditionnement en position lorsque la première pièce (611) se déplace relativement à la deuxième pièce (46).

5. Système (10) selon la revendication précédente, dans lequel la deuxième pièce (46) comprend un élément de guidage portant la surface d'appui (462) et agencé de manière à guider le conditionnement (50) lors de sa descente par gravité en vue de sa réception sur la première pièce (611).

6. Système (10) selon l'une quelconque des revendications précédentes, dans lequel l'organe de détection est formé par un volet s'étendant transversalement à la direction de déplacement relative des première (611) et deuxième (46) pièces.

7. Système (10) selon l'une quelconque des revendications précédentes, dans lequel la au moins une zone de soutien (612, 613) forme une butée verticale, bloquant le déplacement du conditionnement (50) sous l'effet de son poids et de préférence dans lequel la première pièce (611) comporte au moins deux zones de soutien (612, 613) situées de part et d'autre d'un plan médian du système.

8. Système (10) selon l'une quelconque des revendications précédentes dans lequel la première pièce (611) présente une ouverture entre les zones de soutien (612, 613), de manière à ce que le conditionnement puisse tomber par gravité à travers ladite ouverture entre les zones de soutien (612, 613) lorsque la deuxième pièce (46) atteint la deuxième position.

9. Système (10) selon l'une quelconque des revendications précédentes comprenant le conditionnement et dans lequel :
- la distance d1 séparant les deux zones de soutien (612, 613) au niveau du conditionnement lorsque la première pièce (611) est dans la première position est inférieure à la dimension du conditionnement de manière à empêcher ce dernier de passer entre les deux zones de soutiens (612, 613) et
- la distance d2 séparant les deux zones de soutien (612, 613) au niveau du conditionnement lorsque la première pièce (611) est dans la deuxième position est supérieure à la dimension du conditionnement de manière à permettre à ce dernier de tomber par graviter entre les deux zones de soutiens (612, 613).

10. Système (10) selon l'une quelconque des revendications précédentes comprenant le conditionnement (50) et dans lequel les zones de soutien (612, 613) de la première pièce (611) sont conformées de manière à ce qu'une portion P de la hauteur H du conditionnement soit située sous son contact avec les zones de soutien (612, 613) lorsque les première (611) et deuxième (46) pièces sont disposées dans la première position.

11. Système (10) selon l'une quelconque des revendications précédentes dans lequel ladite mobilité relative entre les première (611) et deuxième (46) pièces est une mobilité relative en translation.

12. Système (10) selon l'une quelconque des deux revendications précédentes configuré de manière à ce qu'en fin de coulissement, la première pièce (611) soit escamotée, au moins en partie sous la deuxième pièce (46) selon une direction verticale de manière à ce que le conditionnement (50) puisse se déplacer sous l'effet de la gravité.

13. Système (10) selon l'une quelconque des revendications précédentes configuré de manière à ce que lorsque les premier et deuxième pièces passent de leur première à leur deuxième position relative, le conditionnement passe par gravité de la position de rétention à la position d'infusion.

14. Système (10) selon l'une quelconque des revendications précédentes, comprenant le conditionnement (50) et dans lequel la première pièce (611) présentent au moins deux zones de soutien disposées au contact du conditionnement dans la position de rétention du conditionnement (50), la première pièce (611) et le conditionnement (50) sont conformés de manière à ce que :
- lorsque les première (611) et deuxième (46) pièces sont dans leur première position relative, les zones de soutient (612, 613) forment une butée empêchant la descente du conditionnement par gravité, la distance séparant les deux zones de soutient (612, 613) étant inférieure à la dimension du conditionnement (50) au niveau des deux zones de soutien (612, 613);
- lorsque les première (611) et deuxième (46) pièces sont dans leur deuxième position relative, les zones de soutient (612, 613) autorisent la descente du conditionnement par gravité, la distance séparant les deux zones de soutient (612, 613) étant supérieure à la dimension du conditionnement (50) au niveau des deux zones de soutien (612, 613).

15. Machine de préparation de boisson comprenant un système selon l'une quelconque des revendications précédentes et une chaudière configurée pour chauffer un liquide destiné à infuser le conditionnement (50).

## Patentansprüche

1. System (10) zur Herstellung eines Getränks auf Grundlage einer Packung (50), die ein aufzubrühendes Produkt umfasst, wobei das System (10) umfasst:
zwei Halbkammern (22, 42), die zusammen eine Brühkammer (7) bilden, in deren Innerem die Packung (50) bestimmt ist, aufgebrüht zu werden, wenn sie eine Brühstellung erreicht;
ein erstes (611) und ein zweites (46) Teil, die eine relative Beweglichkeit aufweisen und mindestens zum Teil eine Aufnahmebaugruppe (611, 46) definieren, die dazu bestimmt ist, die Packung (50) vor ihrer Positionierung in einer Brühstellung im Inneren der Brühkammer (7) aufzunehmen,
wobei das erste Teil (611) mindestens eine Stützzone (612, 613) umfasst, die dafür konfiguriert ist, wenn sich das erste (611) und zweite (46) Teil in einer ersten relativen Stellung befinden, die vorzugsweise schwerkraftbedingte Verlagerung der Packung zu stoppen und mit der Packung (50) in Berührung zu kommen, um die Packung (50) in einer Rückhaltestellung zu stützen, welche verhindert, dass die Packung (50) die Brühstellung erreicht; wobei das erste (611) und zweite (46) Teil in ihrer ersten relativen Stellung somit einen Raumabschnitt definieren, der dazu bestimmt ist, die Packung (50) in der Rückhaltestellung zu beherbergen;
wobei, wenn sich das erste (611) und zweite (46) Teil in einer zweiten relativen Stellung befinden, die mindestens eine Stützzone (612, 613) den Durchtritt der Packung (50) freigibt, was es dieser letzteren ermöglicht, die Brühstellung zu erreichen;
**dadurch gekennzeichnet, dass** das System ein Erkennungsorgan (600) umfasst, das fest mit dem ersten Teil (611) verbunden und dafür ausgestaltet ist:
- bei der relativen Verlagerung des ersten (611) und zweiten (46) Teils und bevor das erste (611) und zweite (46) Teil ihre zweite relative Stellung erreichen, in den Raumabschnitt einzudringen, der dazu bestimmt ist, die Packung (50) in ihrer Rückhaltestellung zu beherbergen;
- sich nicht in dem Raumabschnitt zu befinden, der dazu bestimmt ist, die Packung (50) in ihrer Rückhaltestellung zu beherbergen, wenn sich das erste (611) und zweite (46) Teil in ihrer ersten relativen Stellung befinden.

2. System (10) nach dem vorstehenden Anspruch, wobei das System einen Schalter umfasst, der dafür konfiguriert ist, betätigt zu werden, wenn sich das erste (611) und zweite (46) Teil in ihrer zweiten relativen Stellung befinden, und so konfiguriert ist, dass er die Zubereitung des Getränks unterbricht, wenn der Schalter am Ende einer vorbestimmten Verzögerungszeit nicht betätigt wird.

3. System (10) nach einem der vorstehenden Ansprüche, umfassend:
- eine Pumpe, die dafür konfiguriert ist, heißes Wasser in die Brühkammer (7) einzuspritzen, wenn die zwei Halbkammern (22, 42) geschlossen sind, wobei das System dafür konfiguriert ist, die Pumpe nur dann zu betätigen, wenn sich das erste Teil (611) in der zweiten Stellung befindet, und/oder
- einen Heizkessel, der dafür konfiguriert ist, die Brühkammer (7) mit heißem Wasser zu speisen, wobei das System dafür konfiguriert ist, den Betrieb des Heizkessels zu deaktivieren, wenn das erste Teil (611) am Ende einer vorbestimmten Dauer die zweite Stellung nicht erreicht hat, obwohl ein Getränkezubereitungszyklus gestartet wurde, und/oder
- einen Endschalter, der dafür konfiguriert ist, betätigt zu werden, wenn sich das erste Teil (611) in der zweiten Stellung befindet, wobei das System dafür konfiguriert ist, zu erkennen, dass sich das erste Teil (611) in der Endstellung befindet, wenn sich das erste (611) und zweite (46) Teil in ihrer zweiten relativen Stellung befinden.

4. System (10) nach einem der vorstehenden Ansprüche, wobei das zweite Teil (46) eine Auflagefläche (462) umfasst, die dafür konfiguriert ist, die Packung in Stellung zu halten, wenn sich das erste Teil (611) relativ zum zweiten Teil (46) verlagert.

5. System (10) nach dem vorstehenden Anspruch, wobei das zweite Teil (46) ein Führungselement umfasst, das die Auflagefläche (462) trägt und so eingerichtet ist, dass es die Packung (50) bei ihrem schwerkraftbedingten Absinken im Hinblick auf deren Aufnahme auf dem ersten Teil (611) führt.

6. System (10) nach einem der vorstehenden Ansprüche, wobei das Erkennungsorgan von einer Klappe gebildet wird, die sich quer zur Richtung der relativen Verlagerung des ersten (611) und zweiten (46) Teils erstreckt.

7. System (10) nach einem der vorstehenden Ansprüche, wobei die mindestens eine Stützzone (612, 613) einen vertikalen Anschlag bildet, der die Verlagerung der Packung (50) unter der Wirkung ihres Gewichts blockiert, und wobei das erste Teil (611) vorzugsweise mindestens zwei Stützzonen (612, 613) umfasst, die beidseits einer Mittelebene des Systems liegen.

8. System (10) nach einem der vorstehenden Ansprüche, wobei das erste Teil (611) eine Öffnung zwischen den Stützzonen (612, 613) aufweist, sodass die Packung schwerkraftbedingt durch die Öffnung zwischen den Stützzonen (612, 613) hindurchfallen kann, wenn das zweite Teil (46) die zweite Stellung erreicht.

9. System (10) nach einem der vorstehenden Ansprüche, das die Packung umfasst, und wobei:
- der Abstand d1, der die zwei Stützzonen (612, 613) im Bereich der Packung trennt, wenn sich das erste Teil (611) in der ersten Stellung befindet, kleiner ist als die Abmessung der Packung, um zu verhindern, dass diese letztere zwischen den zwei Stützzonen (612, 613) durchtritt, und
- der Abstand d2, der die zwei Stützzonen (612, 613) im Bereich der Packung trennt, wenn sich das erste Teil (611) in der zweiten Stellung befindet, größer ist als die Abmessung der Packung, um dieser letzteren zu ermöglichen, schwerkraftbedingt zwischen die zwei Stützzonen (612, 613) zu fallen.

10. System (10) nach einem der vorstehenden Ansprüche, das die Packung (50) umfasst, und wobei die Stützzonen (612, 613) des ersten Teils (611) so ausgestaltet sind, dass ein Abschnitt P der Höhe H der Packung unter deren Berührung mit den Stützzonen (612, 613) liegt, wenn das erste (611) und zweite (46) Teil in der ersten Stellung angeordnet sind.

11. System (10) nach einem der vorstehenden Ansprüche, wobei die relative Beweglichkeit zwischen dem ersten (611) und zweiten (46) Teil eine relative Translationsbeweglichkeit ist.

12. System (10) nach einem der zwei vorstehenden Ansprüche, das so konfiguriert ist, dass am Ende der Gleitbewegung das erste Teil (611) mindestens zum Teil in einer vertikalen Richtung unter dem zweiten Teil (46) versenkt ist, sodass sich die Packung (50) unter der Wirkung der Schwerkraft verlagern kann.

13. System (10) nach einem der vorstehenden Ansprüche, das so konfiguriert ist, dass wenn das erste und zweite Teil aus ihrer ersten in ihre zweite relative Stellung treten, die Packung schwerkraftbedingt aus der Rückhaltestellung in die Brühstellung tritt.

14. System (10) nach einem der vorstehenden Ansprüche, das die Packung (50) umfasst, und wobei das erste Teil (611) mindestens zwei Stützzonen aufweist, die in der Rückhaltestellung der Packung (50) in Berührung mit der Packung angeordnet sind, wobei das erste Teil (611) und die Packung (50) so ausgestaltet sind, dass:
- wenn sich das erste (611) und zweite (46) Teil in ihrer ersten relativen Stellung befinden, die Stützzonen (612, 613) einen Anschlag bilden, der das schwerkraftbedingte Absinken der Packung verhindert, wobei der Abstand, der die zwei Stützzonen (612, 613) trennt, kleiner ist als die Abmessung der Packung (50) im Bereich der zwei Stützzonen (612, 613);
- wenn sich das erste (611) und zweite (46) Teil in ihrer zweiten relativen Stellung befinden, die Stützzonen (612, 613) das schwerkraftbedingte Absinken der Packung gestatten, wobei der Abstand, der die zwei Stützzonen (612, 613) trennt, größer ist als die Abmessung der Packung (50) im Bereich der zwei Stützzonen (612, 613).

15. Getränkezubereitungsmaschine, die ein System nach einem der vorstehenden Ansprüche und einen Heizkessel umfasst, der dafür konfiguriert ist, eine Flüssigkeit zu erhitzen, die dazu bestimmt ist, die Packung (50) aufzubrühen.

## Claims

1. System (10) for producing drinks from a packaging (50) comprising a product to be infused, the system (10) comprising:
two half-chambers (22, 42) together forming an infusion chamber (7) inside which the packaging (50) is intended to be infused when it reaches an infusion position;
a first (611) and a second (46) part having a relative mobility and partially defining at least one receiving unit (611, 46) intended to receive the packaging (50) before the positioning thereof in an infusion position inside the infusion chamber (7),
wherein, the first part (611) comprises at least one support zone (612, 613) configured to, when the first (611) and second (46) parts are in a first relative position, stop the movement, preferably by gravity of the packaging and enter into contact with the packaging (50) so as to support the packaging (50) in a retaining position preventing the packaging (50) from reaching the infusion position; in the first relative position thereof, the first (611) and second (46) parts thus defining a portion of space intended to receive the packaging (50) in the retaining position;
wherein when the first (611) and second (46) parts are in a second relative position, the at least one support zone (612, 613) releases the passage of the packaging (50) making it possible for the latter to reach the infusion position;
**characterised in that** the system comprises a detection member (600) integral with the first part (611) is shaped to:
- enter into said portion of space intended to receive the packaging (50) in the retaining position thereof during the relative movement of the first (611) and second (46) parts and before the first (611) and second (46) parts reach the second relative position thereof;
- be absent from said portion of space intended to receive the packaging (50) in the retaining position thereof when the first (611) and second (46) parts are in the first relative position thereof.

2. System (10) according to the preceding claim, wherein the system comprises a switch configured to be actuated when the first (611) and second (46) parts are in the second relative position thereof and configured so as to interrupt the preparation of the drink if, at the end of a predetermined timeout, the switch is not actuated.

3. System (10) according to any one of the preceding claims, comprising:
- a pump configured to inject hot water into the infusion chamber (7) when the two half-chambers (22, 42) are closed, the system being configured to actuate the pump only if the first part (611) is in the second position, and/or
- a boiler configured to supply hot water to the infusion chamber (7), the system being configured to deactivate the functioning of the boiler, if at the end of a predetermined duration, the first part (611) has not reached the second position while a drink preparation cycle has been triggered, and/or
- an end position switch configured to be actuated when the first part (611) is in the second position, the system being configured to detect that the first part (611) is in the end position when the first (611) and second (46) parts are in the second relative position thereof.

4. System (10) according to any one of the preceding claims, wherein the second part (46) comprises a support surface (462) configured to maintain the packaging in position when the first part (611) is moved relative to the second part (46).

5. System (10) according to the preceding claim, wherein the second part (46) comprises a guiding element carrying the support surface (462) and arranged so as to guide the packaging (50) during the descent thereof through gravity in view of the receiving thereof on the first part (611).

6. System (10) according to any one of the preceding claims, wherein the detection member is formed by a shutter extending transversally in the relative movement direction of the first (611) and second (46) parts.

7. System (10) according to any one of the preceding claims, wherein the at least one support zone (612, 613) forms a vertical abutment, blocking the movement of the packaging (50) under the effect of the weight thereof, and preferably wherein the first part (611) comprises at least two support zones (612, 613) situated on either side of a median plane of the system.

8. System (10) according to any one of the preceding claims, wherein the first part (611) has an opening between the support zones (612, 613), such that the packaging can fall through gravity through said opening between the support zones (612, 613) when the second part (46) reaches the second position.

9. System (10) according to any one of the preceding claims comprising the packaging, and wherein:
- the distance d1 separating the two support zones (612, 613) at the level of the packaging when the first part (611) is in the first position is less than the dimension of the packaging so as to prevent the latter from passing between the two support zones (612, 613) and
- the distance d2 separating the two support zones (612, 613) at the level of the packaging when the first part (611) is in the second position is greater than the dimension of the packaging so as to make it possible for the latter to fall through gravity between the two support zones (612, 613).

10. System (10) according to any one of the preceding claims comprising the packaging (50), and wherein the support zones (612, 613) of the first part (611) are shaped such that a portion P of the height H of the packaging is situated under the contact thereof with the support zones (612, 613) when the first (611) and second (46) parts are arranged in the first position.

11. System (10) according to any one of the preceding claims, wherein said relative mobility between the first (611) and second (46) parts is a relative mobility in translation.

12. System (10) according to any one of the two preceding claims, configured such that at the end of sliding, the first part (611) is retracted, at least partially under the second part (46) along a vertical direction such that the packaging (50) can be moved under the effect of gravity.

13. System (10) according to any one of the preceding claims, configured such that when the first and second parts pass from the first to the second relative position thereof, the packaging passes through gravity from the retaining position to the infusion position.

14. System (10) according to any one of the preceding claims, comprising the packaging (50) and wherein the first part (611) has at least two support zones arranged in contact with the packaging in the position for retaining the packaging (50), the first part (611) and the packaging (50) are shaped such that:
- when the first (611) and second (46) parts are in the first relative position thereof, the support zones (612, 613) form an abutment preventing the descent of the packaging through gravity, the distance separating the two support zones (612, 613) being less than the dimension of the packaging (50) at the level of the two support zones (612, 613);
- when the first (611) and second (46) parts are in the second relative position thereof, the support zones (612, 613) enable the descent of the packaging through gravity, the distance separating the two support zones (612, 613) being greater than the dimension of the packaging (50) at the level of the two support zones (612, 613).

15. Machine for preparing drinks comprising a system according to any one of the preceding claims and a boiler configured to heat a liquid intended to infuse the packaging (50).
